# EUROPEAN PATENT SPECIFICATION

(11) **EP 3 922 541 B1**
(45) Date of publication and mention of the grant of the patent: **24.05.2023**
(21) Application number: 19914503.8
(22) Date of filing: 19.07.2019
(51) Int. Cl.: B62J 17/00, B62H 1/02, B62M 7/02, B62M 7/12, B62J 23/00, B62J 40/00

(54) **FLOW STRAIGHTENING STRUCTURE OF SADDLE-RIDING TYPE VEHICLE**
STRÖMUNGSBEGRADIGUNGSSTRUKTUR EINES GRÄTSCHSITZFAHRZEUGS
STRUCTURE DE REDRESSEMENT DE FLUX D'UN VÉHICULE DU TYPE À CHEVAUCHEMENT DE SELLE

(30) Priority: 08.02.2019 WO PCT/JP2019/004670
(43) Date of publication of application: 15.12.2021
(73) Proprietor: HONDA MOTOR CO., LTD., Minato-ku Tokyo 107-8556 (JP)
(72) Inventor: SHIMMURA Hiroyuki, Wako-shi, Saitama 351-0193 (JP); SHIMIZU Takahiko, Wako-shi, Saitama 351-0193 (JP); NAKANISHI Ryuichi, Wako-shi, Saitama 351-0193 (JP); TADOKORO Hiroshi, Wako-shi, Saitama 351-0193 (JP); TAKIGUCHI Chikashi, Wako-shi, Saitama 351-0193 (JP); NISHIWAKI Daisuke, Wako-shi, Saitama 351-0193 (JP); TAKAHASHI Yusuke, Wako-shi, Saitama 351-0193 (JP); AIKAWA Yuki, Wako-shi, Saitama 351-0193 (JP); NUMATA Takeo, Wako-shi, Saitama 351-0193 (JP)
(74) Representative: Kiwit, Benedikt
(86) International application number: PCT/JP2019/028456
(87) International publication number: WO 2020/161938

(56) References cited:
- CN-C- 1 091 703
- JP-A- S60 146 767
- JP-A- 2009 132 355
- JP-A- 2009 132 355
- JP-A- 2017 105 293
- GATO CHOCOLAT (GP02A): "Refinition of each part damaged by PCX crash Part 2" Mysterious muffler cover "edition", INTERNET CITATION, 1 January 2014 (2014-01-01), XP009530003, Retrieved from the Internet: URL:http://personalcomfortx.blog.fc2.com/b log-entry-127.html [retrieved on 2014-05-23]
- SPEEDRA: "SSK Muffler Cover Dry Carbon Twill Rustic BMW R1200GS 2013 32- R1200GS Adventure 2014 - CBM0904TG", Amazon - Automotive - Powersports Parts - Exhaust - Covers Amazon - Automotive - Powersports Parts - Exhaust - Covers, pages 1-3, XP009530002, JP Retrieved from the Internet: URL:https://www.amazon.co.jp/SSK-%E3%83%9E %E3%83%95%E3%83%A9%E3%83%BC%E3%82%AB%E3%83 %90%E3%83%BC-%E3%83%89%E3%83%A9%E3%82%A4%E 3%82%AB%E3%83%BC%E3%83%9C%E3%83%B3-Adventu re-CBM0904TG/dp/B078MJW99M
- , 18 April 2018 (2018-04-18), XP011087424,
- Gato Chocolat (GP02A): "Refinition of each part damaged by PCX crash Part 2" Mysterious muffler cover "edition", HONDA PCX A GOGO! - PCX commuting speedup plan - HONDA PCX A GOGO! - PCX commuting speedup plan -, HONDA PCX A GOGO!, JP, 23 May 2014 (2014-05-23), XP009530003, JP Retrieved from the Internet: URL:http://personalcomfortx.blog.fc2.com/b log-entry-127.html

## Description

### TECHNICAL FIELD

The present invention relates to a flow straightening structure of a saddle-riding type vehicle.

### BACKGROUND ART

For example, in JP 2015-110 381 A, in a unit swing engine of a scooter, a rear wheel is disposed at a left and right center of a vehicle body, and a muffler and an air cleaner are separately disposed on both the left and right sides of the rear wheel. A space can be effectively used and an increase in intake air temperature (due to an effect of exhaust heat) can be curbed by disposing the muffler and the air cleaner separately.

JP 2009-132 355 A and CN 1 091 703 C show vehicles similar to JP 2015-110 381 A. Document "Refinition of each part damaged by PCX crash Part 2, Mysterious muffler cover edition", which can be accessed at http://personalcomfortx.blog.fc2.com/blog-entry-127.html, is considered being the closest prior art and shows: A flow straightening structure of a saddle-riding type vehicle, comprising:a silencer which is disposed on a side of a rear wheel so that at least a part thereof overlaps the rear wheel in a side view of the vehicle, and which silences exhaust gas discharged from an internal combustion engine, wherein the silencer includes a flow straightening structure which forms a traveling wind receiving surface which receives traveling wind, the flow straightening structure is to guide the traveling wind which flows along the traveling wind receiving surface in a predetermined direction,the silencer includes an inclined portion which extends diagonally in a forward and rearward direction of the vehicle and forms the traveling wind receiving surface, the silencer extends along an axis,an upper surface portion of the silencer has a rearward and upward inclined portion which is inclined rearward and upward with respect to the axis in a side view, and a rearward and downward inclined portion which is connected to a rear of the rearward and upward inclined portion and is inclined rearward and downward with respect to the axis in a side view, and the flow straightening structure is provided in front of the rearward and downward inclined portion, and is provided on the rearward and upward inclined portion.

### SUMMARY

### PROBLEMS TO BE SOLVED BY THE INVENTION

However, an air flow wound up by the rear wheel is pushed out to both sides of the vehicle body on the side of the rear wheel, and thus turbulence and negative pressure are caused. This turbulence and negative pressure may affect, for example, an intake amount of the air cleaner, water and mud splashes in a wheel house, or the like and may affect improvement of drivability. In order to avoid these effects, it is conceivable to provide a so-called hugger fender on the rear wheel to cause the air flow in the tire house to easily flow to the rear, but there is a problem in that this increases the cost and weight.

Therefore, an object of the present invention is to provide a flow straightening structure for a saddle-riding type vehicle capable of curbing turbulence and negative pressure generated around a rear wheel with a simple structure.

### MEANS FOR SOLVING THE PROBLEM

As a means for solving the above problem, a first aspect of the present invention is a flow straightening structure of a saddle-riding type vehicle, including a flow straightening structure (61) which forms a traveling wind receiving surface (62a,) which receives traveling wind on a member (42) of which at least a part overlaps a rear wheel (WR) in a side view of the vehicle, wherein the flow straightening structure (61) guides the traveling wind which flows along the traveling wind receiving surface (62a) in a predetermined direction.

Further according to the first aspect, a silencer (42) which silences exhaust gas discharged from an internal combustion engine (E) is provided at a side of the rear wheel (WR), and the silencer (42) includes an inclined portion (62) which extends diagonally in a forward and rearward direction of the vehicle and forms the traveling wind receiving surface (62a), and a protruding portion (63) which extends along the inclined portion (62) and protrudes upward from the traveling wind receiving surface (62a) to form the flow straightening structure (61).

Further according to the first aspect, the silencer (42) extends along an axis (C1), an upper surface portion (52) of the silencer (42) has a rearward and upward inclined portion (53) which is inclined rearward and upward with respect to the axis (C 1) in a side view, and the rearward and upward inclined portion (53) includes the inclined portion (62) and the protruding portion (63) to form the flow straightening structure (61).

According to a second aspect of the present invention, in the first aspect, the protruding portion (63) which has a rib shape and bends upward and extends from the inclined portion (62) in the flow straightening structure (61) may be provided at an inner edge portion (53b) of the rearward and upward inclined portion (53) on an inner side in a vehicle width direction.

Further according to the first aspect, a rearward and downward inclined portion (54) which is connected to a rear of the rearward and upward inclined portion (53) and is inclined rearward and downward with respect to the axis (C1) in a side view is provided, and the flow straightening structure (61) is provided in front of the rearward and downward inclined portion (54), and is provided on the rearward and upward inclined portion (53) (to avoid the rearward and downward inclined portion (54)).

According to a third aspect of the present invention, in the first or second aspect, an inner eaves portion (52b) may be provided inside the rearward and downward inclined portion (54) in a vehicle width direction to protrude in a flush manner to avoid the rearward and upward inclined portion (53).

According to a fourth aspect of the present invention, in any one of the first to third aspects, the silencer (42) may include a silencer main body (43) and a cover member (51) which is mounted on the silencer main body (43), and the inclined portion (62) and the protruding portion (63) may be provided on at least one of the silencer main body (43) and the cover member (51).

According to an fifth aspect of the present invention, in any one of the first to fourth aspects, the saddle-riding type vehicle (1) may include a swing unit (U) which allows the internal combustion engine (E) and the rear wheel (WR) to swing integrally with respect to a vehicle body frame (F).

According to a sixth aspect of the present invention, in any one of the first to fifth aspects, an intake system component (25) which suctions air into the internal combustion engine (E) may be provided, the intake system component (25) may have a suction port (25c) located furthest upstream, the silencer (42) may be disposed on one side of the rear wheel (WR), and the suction port (25c) may be disposed on the other side of the rear wheel (WR).

According to a seventh aspect of the present invention, in any one of the first to sixth aspects, the inclined portion (62) and the protruding portion (63) may be inclined to be located upward toward a rear in a side view of the vehicle.

According to an eighth aspect of the present invention, in any one of the first to seventh aspects, the inclined portion (62) and the protruding portion (63) may be inclined to be located inward in a vehicle width direction toward the rear in a top view of the vehicle.

According to a ninth aspect of the present invention, in any one of the first to eighth aspects, the protruding portion (63) may be formed to be located upward toward an inner side of the inclined portion (62) in the vehicle width direction.

According to a tenth aspect of the present invention, in any one of the first to ninth aspects, the inclined portion (62) and the protruding portion (63) may extend to have an arc-shaped cross-sectional shape.

According to a first example, a cover member (26a) which is mounted on a power unit (U) of the saddle-riding type vehicle and of which at least a part overlaps the rear wheel (WR) in the side view of the vehicle may be provided, and the flow straightening structure (71) which forms the traveling wind receiving surface (72a) may be provided at the cover member (26a).

According to a second example, the flow straightening structure (71) may include a projection portion (72) which extends in a longitudinal direction at a rearward and upward inclined edge of the cover member (26a).

According to a third example, the projection portion (72) may have a triangular peak shape in a cross-sectional view intersecting the longitudinal direction.

According to a fourth example, a stand (75) of which at least a part overlaps the rear wheel (WR) in the side view of the vehicle may be provided, and the flow straightening structure (81) which forms the traveling wind receiving surface (82a) may be provided at the stand (75).

According to aspect fifth example, the flow straightening structure (81) may have a tapered portion (82) which widens toward a tip end side of a support leg (75br) at the support leg (75br) of the stand (75), and the tapered portion (82) may widen an open end (82c) on a tip end side of the support leg to a position equivalent to an outer end (75d1) of a grounding plate (75d) in a vehicle width direction.

According to an eleventh aspect of the present invention, in any one of the first to tenth aspects, an internal combustion engine (E) may be provided at a power unit (U) of the saddle-riding type vehicle, and a suction port (25c) of an air cleaner (25) which filters external air supplied to the internal combustion engine (E) may be provided on a side opposite to the flow straightening structure (61) with the rear wheel (WR) sandwiched therebetween in a vehicle width direction.

### ADVANTAGE OF THE INVENTION

According to the first aspect of the present invention, the traveling wind flowing along the traveling wind receiving surface of the flow straightening structure is guided in a predetermined direction and flows with directivity. An effect in which the air in the tire house is pushed out to the side of the rear wheel can be obtained by causing the traveling wind with such directivity to flow to the side of the rear wheel (the side of the tire house), for example. In this way, the turbulence and the negative pressure generated around the rear wheel can be curbed by providing the flow straightening structure on a member which overlaps the rear wheel in a side view of the vehicle to control the air flow.

Further according to the first aspect of the present invention, the traveling wind flowing along the traveling wind receiving surface of the inclined portion of the silencer is guided by the protruding portion and flows in a predetermined direction with directivity. The effect in which the air in the tire house is pushed out to the side of the rear wheel is obtained by causing the traveling wind with directivity in this way to flow to the side of the rear wheel (the side of the tire house). The air in the tire house flows around the rear wheel and causes turbulence, but an influence of the air flow on the vicinity of the rear wheel can be curbed by pushing this turbulence out toward the side of the rear wheel.

Further according to the first aspect of the present invention, since the flow straightening structure is provided on the rearward and upward inclined portion, it becomes easy to form the traveling wind receiving surface. The traveling wind flowing along the traveling wind receiving surface is guided by the protruding portion and can flow in a predetermined direction with directivity.

According to the second aspect of the present invention, since the rib-shaped protruding portion of the flow straightening structure is provided on the inner edge portion of the rearward and upward inclined portion, spread of the traveling wind inward in the vehicle width direction is curbed. Thus, the traveling wind flowing along the traveling wind receiving surface can be caused to flow in a predetermined direction with directivity while the spread of the traveling wind inward in the vehicle width direction is curbed.

Further according to the first aspect of the present invention, since the flow straightening structure is provided only on the rearward and upward inclined portion of the front and rear inclined portions, the flow straightening structure can be easily formed. When the flow straightening structure is provided over the front and rear inclined portions, the shape of the flow straightening structure and its surroundings becomes complicated. The shape of the flow straightening structure and the like can be simplified and easily formed by providing the flow straightening structure while avoiding the rearward and downward inclined portion.

According to the third aspect of the present invention, since the inner eaves portion is provided in the flush manner inside the rearward and downward inclined portion in the vehicle width direction, it becomes difficult for the traveling wind to separate behind the flow straightening structure. When the traveling wind spreads inward in the vehicle width direction behind the flow straightening structure, the traveling wind easily flows along the inner eaves portion. Since the inner eaves portion is provided to avoid the rearward and upward inclined portion, the inner eaves portion can be easily formed. When the inner eaves portion is provided over the front and rear inclined portions, the shape of the inner eaves portion and its surroundings becomes complicated. The shape of the inner eaves portion and the like can be simplified and easily formed by providing the inner eaves portion while avoiding the rearward and upward inclined portion. Since the inner eaves portion is separated from the flow straightening structure in the forward and rearward direction, the shapes of the inner eaves portion, the flow straightening structure, and the like can be simplified and easily formed in this respect as well.

According to the fourth aspect of the present invention, since the inclined portion and the protruding portion are provided on at least one of the muffler main body and the muffler cover, a degree of freedom in providing the flow straightening structure can be increased, and the air flow can be easily controlled.

According to the fifth aspect of the present invention, since a variety of auxiliary equipment such as the air cleaner is mounted in the swing unit, the influence of the turbulence in the tire house is large, but the influence of the air flow on the auxiliary equipment can be curbed by pushing this turbulence out to the side of the rear wheel.

According to the sixth aspect of the present invention, the side which pushes the air in the tire house out toward the side of the rear wheel by the inclined portion and the protruding portion of the silencer becomes the side opposite to the suction port of the intake system component because the silencer and the suction port are disposed separately with the rear wheel interposed therebetween. When the suction port is on the side on which the air in the tire house is circulated around the rear wheel and pushed out to the side of the rear wheel, the intake amount of the intake system component may be affected. On the other hand, since the side on which the air in the tire house is pushed out is the side opposite to the suction port, the pushed-out air flow does not affect the suction port, and the air flow pushed out to the suction port side is also reduced. Thus, the air suction efficiency of the intake system component can be maintained well. In addition, an influence of exhaust heat on the air suction of the intake system component can be curbed.

According to the seventh aspect of the present invention, the turbulence in the tire house can be effectively curbed by causing the traveling wind to flow upward along the inclined portion and the protruding portion. That is, in the tire house, since entrainment wind is likely to be generated between the rear cowl and the other members on the upper side, the turbulence in the tire house can be effectively curbed by causing the traveling wind to flow upward.

According to the eighth aspect of the present invention, in the tire house, since air tends to be circulated around the rear wheel and causes the turbulence, the air around the rear wheel can be easily pushed out to the side of the rear wheel, and the turbulence in the tire house can be effectively curbed by causing the traveling wind to flow toward the inner side in the vehicle width direction (the rear wheel side).

According to the ninth aspect of the present invention, since the protruding portion which stands above the inclined portion is located upward toward the inner side in the vehicle width direction, the traveling wind guided by the protruding portion tends to generate a prescribed vortex, and the turbulence in the tire house can be effectively curbed

According to the tenth aspect of the present invention, since the inclined portion and the protruding portion have the arc-shaped cross-sectional shape, the air flow guided by the protruding portion is more likely to generate a prescribed vortex, and the turbulence in the tire house can be curbed more effectively.

According to the first example, the traveling wind flowing along the traveling wind receiving surface of the flow straightening structure of the cover member on the side of the power unit is guided in a predetermined direction and flows with directivity. The effect in which the air in the tire house is pushed out to the side of the rear wheel or the like is obtained by causing the traveling wind with such directivity to flow to the side of the rear wheel (the side of the tire house), for example. Turbulence and negative pressure generated around the rear wheel can be curbed by providing the flow straightening structure on the cover member which overlaps the rear wheel in a side view of the vehicle to control the air flow in this way.

According to the second example, the traveling wind with directivity can be easily formed by the projection portion along the inclined edge of the cover member.

According to the third example, the air flow can be easily controlled by the inclined surface of the projection portion having a triangular cross section.

According to the fourth example, the traveling wind flowing along the traveling wind receiving surface of the flow straightening structure of the stand is guided in a predetermined direction and flows with directivity. The effect in which the air in the tire house is pushed out to the side of the rear wheel or the like is obtained by causing the traveling wind with such directivity to flow to the side of the rear wheel (the side of the tire house), for example. Turbulence and negative pressure generated around the rear wheel can be curbed by providing the flow straightening structure on the stand which overlaps the rear wheel in a side view of the vehicle to control the air flow in this way.

According to the fifth example, since the open end of the tapered portion in the flow straightening structure extends to the position equivalent to the outer end of the grounding plate in the vehicle width direction, the traveling wind guided to the inclination of the tapered portion can flow while interference with the grounding plate is curbed.

According to the eleventh aspect of the present invention, the effect in which the air in the tire house is pushed out to the side of the rear wheel on the side with the flow straightening structure can be obtained by controlling the air flow of the traveling wind with the flow straightening structure. On the other hand, since the suction port is on the side opposite to the side on which the traveling wind is pushed out, an influence on the air suction of the air cleaner can be curbed.

### BRIEF DESCRIPTION OF THE DRAWINGS

FIG. 1 is a right side view of a motorcycle according to an embodiment of the present invention.
FIG. 2 is a right side view of a vicinity of a muffler of the motorcycle.
FIG. 3 is a top view of a vicinity of a rear wheel of the motorcycle.
FIG. 4 is a perspective view of the vicinity of the muffler of the motorcycle.
FIG. 5 is a right side view of the muffler and an exhaust pipe of the motorcycle.
FIG. 6 is a top view of the muffler and the exhaust pipe of the motorcycle.
FIG. 7 is a front view of the muffler and the exhaust pipe of the motorcycle.
FIG. 8 is a cross-sectional view along line VIII-VIII of FIG. 5.
FIG. 9 is a cross-sectional view of a flow straightening structure portion of FIG. 8, wherein FIGS. 9(a) and 9(b) show comparative examples, and FIG. 9(c) shows an embodiment.
FIG. 10 is an operation explanatory view corresponding to FIG. 4.
FIG. 11 is an operation explanatory view corresponding to FIG. 3.
FIG. 12 is a right side view corresponding to FIG. 2 according to an example.
FIG. 13 is a right side view of a radiator cover according to the example.
FIG. 14 is a view of the radiator cover according to the example from arrow XIV
FIG. 15 is a cross-sectional view along line XV-XV of FIG. 13.
FIG. 16 is a perspective view of the radiator cover according to the example.
FIG. 17 is a plan view of a main stand according to the example.
FIG. 18 is a right side view of the main stand according to the example.
FIG. 19 is an operation explanatory view corresponding to FIG. 10 according to the example.
FIG. 20 is an operation explanatory view corresponding to FIG. 3 according to the example.
FIG. 21 is an operation explanatory view corresponding to FIG. 13 according to the example.
FIG. 22 is a first operation explanatory view showing an operation of the flow straightening structure of the muffler, wherein FIG. 22(a) shows the present embodiment, and FIG. 22(b) shows a comparative example.
FIG. 23 is a second operation explanatory view showing the operation of the flow straightening structure of the muffler, wherein FIG. 23(a) shows the present embodiment, and FIG. 23(b) shows a comparative example.
FIG. 24 is a third operation explanatory view showing the operation of the flow straightening structure of the muffler, wherein FIG. 24(a) shows the present embodiment, and FIG. 24(b) shows a comparative example.
FIG. 25 is an operation explanatory view corresponding to FIG. 22 showing a fluid analysis result of the flow straightening structure of the muffler, wherein FIG. 25(a) shows the present embodiment, and FIG. 25(b) shows a comparative example.
FIG. 26 is an operation explanatory view corresponding to FIG. 24 showing the fluid analysis result of the flow straightening structure of the muffler, wherein FIG. 26(a) shows the present embodiment, and FIG. 26(b) shows a comparative example.
FIG. 27 is a first operation explanatory view showing the fluid analysis result of the flow straightening structure of the radiator cover in a cross section orthogonal to a forward and rearward direction of the vehicle, wherein FIG. 27(a) shows the present embodiment and FIG. 27(b) shows a comparative example.
FIG. 28 is a second operation explanatory view showing the fluid analysis result of the flow straightening structure of the radiator cover in a cross section orthogonal to the forward and rearward direction of the vehicle, wherein FIG. 28(a) shows the present embodiment and FIG. 28(b) shows a comparative example.
FIG. 29 is an operation explanatory view showing the fluid analysis result of the flow straightening structure of the main stand in a cross section orthogonal to a vertical direction of the vehicle, wherein FIG. 29(a) shows the present embodiment and FIG. 29(b) shows a
comparative example.

### DESCRIPTION OF THE EMBODIMENTS

Hereinafter, embodiments of the present invention will be described with reference to the drawings. Unless otherwise specified, orientations of the front, rear, left, and right directions in the following description are the same as those in a vehicle described below. Further, an arrow FR indicating a forward direction with respect to the vehicle, an arrow LH indicating a leftward direction with respect to the vehicle, and an arrow UP indicating an upward direction with respect to the vehicle are shown at appropriate positions in the drawing used in the following description.

### <Whole vehicle>

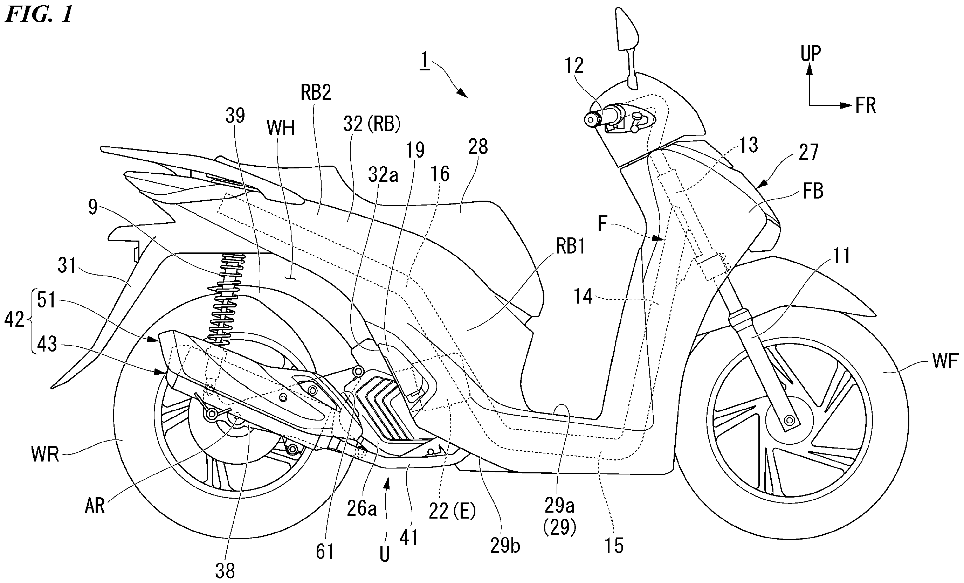

As shown in FIG. 1, a motorcycle (a saddle-riding type vehicle) 1 of the present embodiment includes a head pipe 13 at a front end portion of a vehicle body frame F. A front fork 11 which pivotally supports a front wheel WF and a steering handle 12 are supported on the head pipe 13 to be steerable. The lower side of a front portion of a swing-type power unit (hereinafter referred to as a power unit U) is supported on a lower portion of the vehicle body frame F to swing up and down. The motorcycle 1 is a unit swing type saddle-riding type vehicle including the power unit U in which an engine (an internal combustion engine) E which is a prime mover and a rear wheel WR which is a driving wheel swing integrally with respect to the vehicle body frame F (a vehicle body).

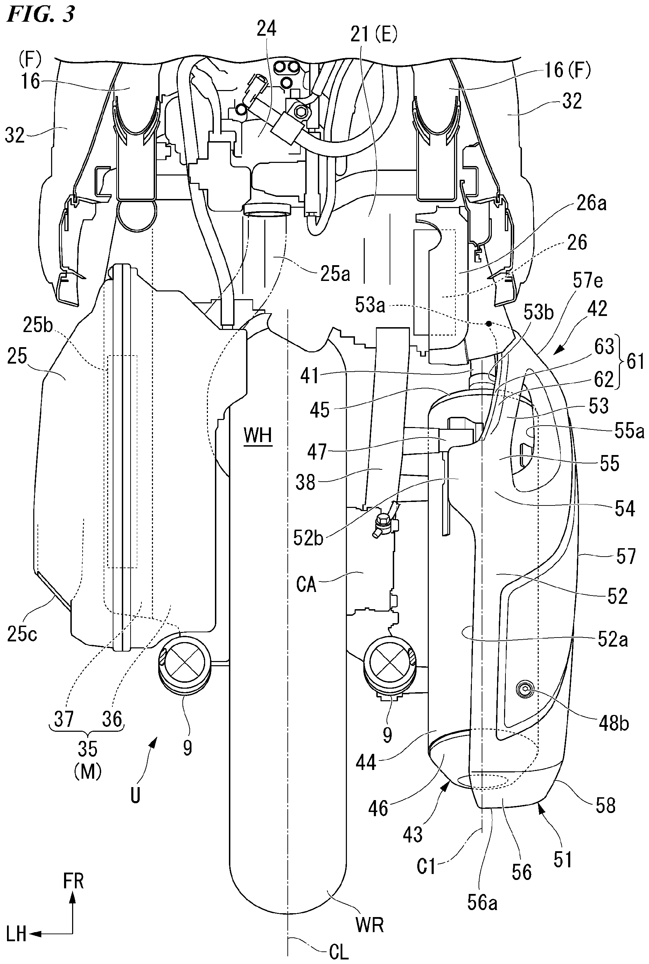

Also referring to FIG. 3, the power unit U is an integrated unit in which the engine E which is the prime mover of the motorcycle 1 is disposed at a front portion thereof and a transmission M which shifts an output of the engine E is disposed on the left side of a rear portion thereof. An axle (a rear wheel axle AR) of the rear wheel WR which is the driving wheel is supported by a rear portion of the transmission M. The lower side of the front portion of the power unit U is supported by, for example, a support portion at a lower portion of the vehicle body frame F to be swingable up and down via a suspension link or the like. A rear end portion of the power unit U is supported by a rear end portion of the vehicle body frame F via a rear cushion 9 which is a shock absorber. A center line CL in FIG. 3 indicates a left and right center of the vehicle body.

As shown in FIG. 1, the vehicle body frame F includes a down frame 14 which extends downward and rearward from the head pipe 13, a lower frame 15 which extends rearward from a lower end portion of the down frame 14, and a rear frame 16 which extends rearward and upward from a rear end portion of the lower frame 15. Left and right steps 19 for a passenger are supported by a front portion of the rear frame 16 via a bracket (not shown). The left and right steps 19 for a passenger can be rotated between an in-use state in which the steps protrude substantially horizontally outward in a vehicle width direction and a folded state in which the steps are inclined rearward and upward. The drawing shows the steps 19 in the folded state.

The periphery of the vehicle body frame F is covered with a vehicle body cover 27. A seat 28 having front and rear seating surfaces for occupant seating is supported above a rear portion of the vehicle body cover 27. The vehicle body cover 27 includes a step floor 29 on which a driver seated on the seat 28 rests his/her feet, a front body FB which leads to the front of the step floor 29, and a rear body RB which leads to the rear of the step floor 29. A straddling space which makes it easier for the occupant to straddle the vehicle body is provided between the seat 28 and the steering handle 12 above the step floor 29.

The rear body RB has a front portion RB1 which stands above the step floor 29 and a rear portion RB2 which extends rearward from an upper end portion of the front portion RB1, and has substantially an L shape in a side view. Behind the front portion RB1 and below the rear portion RB2 of the rear body RB, a tire house WH which accommodates the rear wheel WR in a swingable manner is defined by an inner cover (not shown) in the rear body RB and a rear fender 31 extending downward and rearward from a lower surface of the rear portion RB2 of the rear body RB. A reference numeral 32 in the drawing indicates a rear side cover which forms left and right side surfaces of the rear body RB, and a reference numeral 32a indicates a rear edge of the rear side cover 32 (hereinafter referred to as a front rear edge of the rear body RB) in the front portion RB 1 of the rear body RB. The front rear edge 32a of the rear body RB is separated in front of a tire front end of the rear wheel WR (corresponding to the foremost end of the rear wheel WR) in a side view. The front rear edge 32a of the rear body RB is disposed so that a rear edge of the step 19 in the folded state overlaps it.

The step floor 29 has a flat shape over a left and right width of a low floor portion of the vehicle body, for example, and forms a substantially horizontal upper surface (a floor surface 29a) of the low floor portion. A center tunnel which extends in a forward and rearward direction may be provided at the left and right center of the step floor 29.

The motorcycle 1 is a scooter type vehicle having the step floor 29 on which the driver rests his/her feet. The upper surface (a foot resting surface) 29a of the step floor 29 is slightly inclined rearward and upward in a side view. A lower surface rear portion 29b which is steeper than the upper surface 29a and is inclined rearward and upward is formed at a rear portion of the step floor 29 on the lower surface side.

### <Power unit>

As shown in FIGS. 1 to 3, the power unit U integrally includes a front engine E and a transmission case 35 which accommodates the transmission M on the rear left side.

The engine E is a 4-stroke single-cylinder engine in which a rotation center axis of a crankshaft (not shown) is aligned in a left and right direction (a vehicle width direction), and a cylinder part 22 protrudes forward from a front end portion of a crankcase 21 substantially horizontally (specifically, to be inclined slightly forward and upward).

A case main body 36 is integrally formed on the left side of the crankcase 21 as a rear arm which protrudes to the left and then extends rearward. The case main body 36 opens outward in the vehicle width direction, and a case cover 37 is mounted on the open portion from the outside in the vehicle width direction. The case main body 36 and the case cover 37 constitute the transmission case 35 which accommodates the transmission M.

The transmission M is a belt type continuously variable transmission which is accommodated in a lengthwise direction in a side view of the transmission case 35. The transmission M includes a drive pulley which is accommodated in a front portion of the transmission case 35 and is disposed coaxially with the crankshaft, a driven pulley which is accommodated in a rear portion of the transmission case 35, and an endless V-belt (a transmission belt) which is wound on the drive pulley and the driven pulley, which are not shown. The rear wheel WR is integrally rotatably mounted on a rear wheel axle AR (an output shaft) which protrudes to the right side of the rear portion of the transmission case 35.

A radiator 26 for cooling the engine E is disposed on the right side of the crankcase 21. A radiator cover 26a having a louver mounting opening is mounted to the left and right outer sides of the radiator 26.

A front end portion of an auxiliary arm 38 which extends in the forward and rearward direction is fixed to the right side of the rear portion of the crankcase 21. A rear end portion of the auxiliary arm 38 supports a right end portion of the rear wheel axle AR. The auxiliary arm 38 and the transmission case 35 constitute a swing arm which supports the rear wheel WR. Lower end portions of a pair of left and right rear cushions 9 are respectively connected to rear end portions of the transmission case 35 and the auxiliary arm 38. Upper end portions of the left and right rear cushions 9 are respectively connected to rear end portions of the left and right rear frames 16. In the drawing, a reference numeral 39 indicates an inner fender which is integrally swingably mounted on the power unit U and covers a front upper portion of the rear wheel WR, and a reference numeral CA indicates a caliper supported above the rear portion of the auxiliary arm 38.

Referring to FIG. 3, a throttle body 24 is disposed above the cylinder part 22 of the engine E as an intake system component. A front end portion of the throttle body 24 on the downstream side is connected to an upper portion (an intake port of a cylinder head) of the cylinder part 22 via an insulator (not shown). An air cleaner 25 which filters external air supplied to the engine E is connected to a rear end portion of the throttle body 24 on the upstream side via a connecting tube 25a. The connecting tube 25a bends to the left behind the throttle body 24 in a plan view and is connected to a front end portion of the air cleaner 25 disposed above the transmission case 35. A reference numeral 25b in the drawing indicates an element accommodated in the air cleaner 25.

Hereinafter, components from the air cleaner 25 to the intake port will be referred to as intake components for suctioning air into the engine E. A suction port 25c located furthest upstream of the intake system component is disposed on the outer side of the air cleaner 25. The intake system component may include a carburetor.

An exhaust pipe 41 is connected to a lower portion of the cylinder part 22 (the exhaust port of the cylinder head). The exhaust pipe 41 bends rearward and extends below the cylinder part 22, and bends and extends rearward and upward and outward in the vehicle width direction at a position substantially below the radiator 26. A rear end portion of the exhaust pipe 41 is connected to a front end portion of a muffler (a silencer) 42 disposed on the right side of the rear wheel WR. The muffler 42 is disposed on the side opposite to the air cleaner 25 with the rear wheel WR interposed therebetween in the vehicle width direction. That is, the muffler 42 is disposed on the right side of the rear wheel WR, and the air cleaner 25 is disposed on the left side of the rear wheel WR.

### <Muffler>

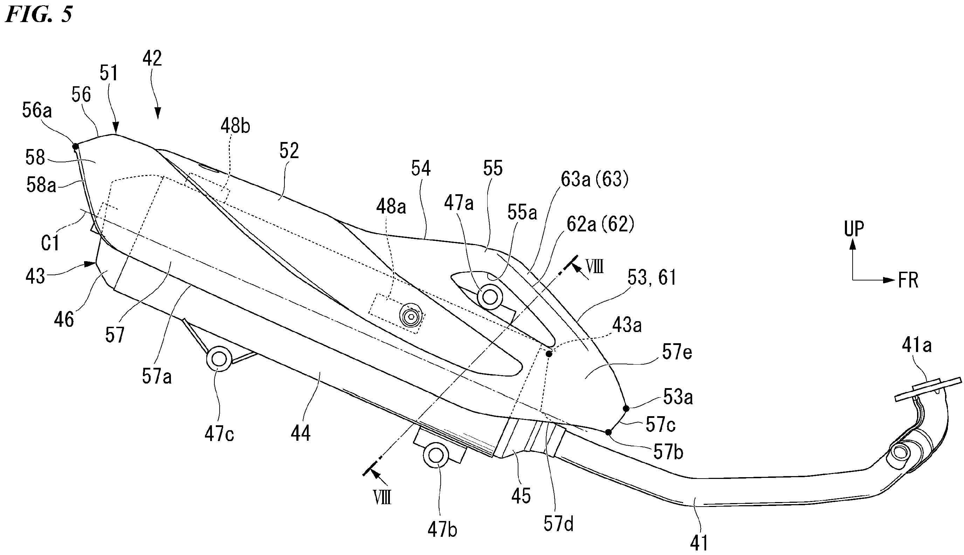

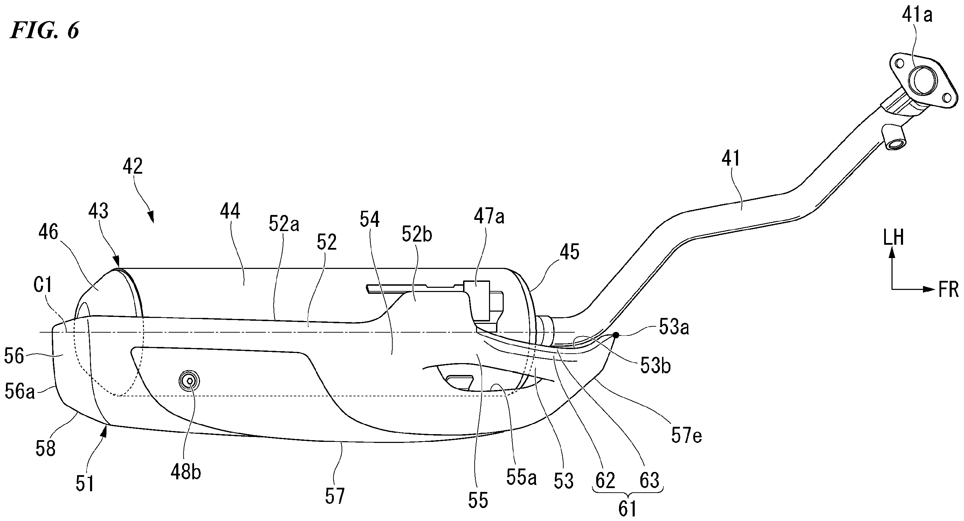

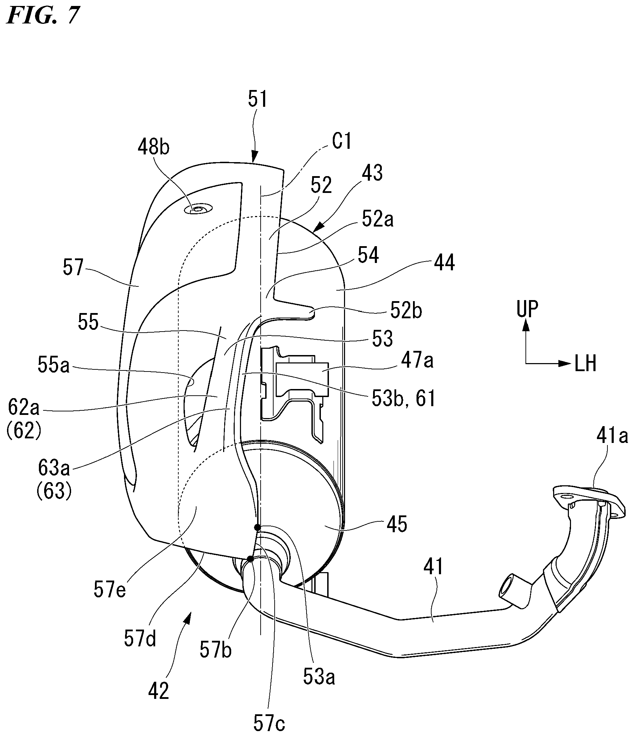

As shown in FIGS. 5 to 8, the muffler 42 includes a muffler main body (a silencer main body) 43 having a cylindrical exterior, and a muffler cover (a cover member) 51 which covers a range extending from above the muffler main body 43 to the outside in the vehicle width direction.

The muffler main body 43 extends linearly along a central axis C1 thereof and is mounted in the vehicle body in a posture in which it is inclined rearward and upward. The muffler main body 43 is disposed, for example, so that the central axis C1 is parallel to a side surface of the vehicle body. Hereinafter, the forward and rearward direction along the axis C1 in a side view may be referred to as a forward and rearward direction of the muffler, and a vertical direction orthogonal to the axis C1 in the side view may be referred to as an upward and downward direction of the muffler.

The muffler main body 43 includes a tubular body 44 along the central axis C1, a front cap 45 which closes a front end portion of the tubular body 44, and an end cap 46 which closes a rear end portion of the tubular body 44. The tubular body 44 has a double pipe structure having inner and outer tubes 44a and 44b. The front cap 45 has a tapered shape of which a diameter increases toward the rear side, and the exhaust pipe 41 is connected to a front end portion of the front cap 45. A reference numeral 41a in the drawing indicates a base end portion of the exhaust pipe 41 connected to the engine E. The end cap 46 has a tapered shape of which a diameter is reduced toward the rear side, and a discharge port is disposed at a rear end portion thereof. The muffler main body 43 has, for example, a basic configuration in which an internal space of the tubular body 44 is divided into a plurality of expansion chambers in the forward and rearward direction of the muffler, and the plurality of expansion chambers are appropriately communicated with each other.

Three mount brackets 47a, 47b, and 47c for mounting on the auxiliary arm 38 and two cover brackets 48a and 48b for mounting the muffler cover 51 are fixed to the outer periphery of the tubular body 44. The mount brackets 47a, 47b, and 47c are fastened to the auxiliary arm 38, for example, using bolts which follow the vehicle width direction. The cover brackets 48a and 48b fasten and fix the muffler cover 51 with screws which follow a radial direction of the muffler main body 43, for example. For convenience of illustration, the screws to be fastened to the cover brackets 48a and 48b may be designated by reference numerals.

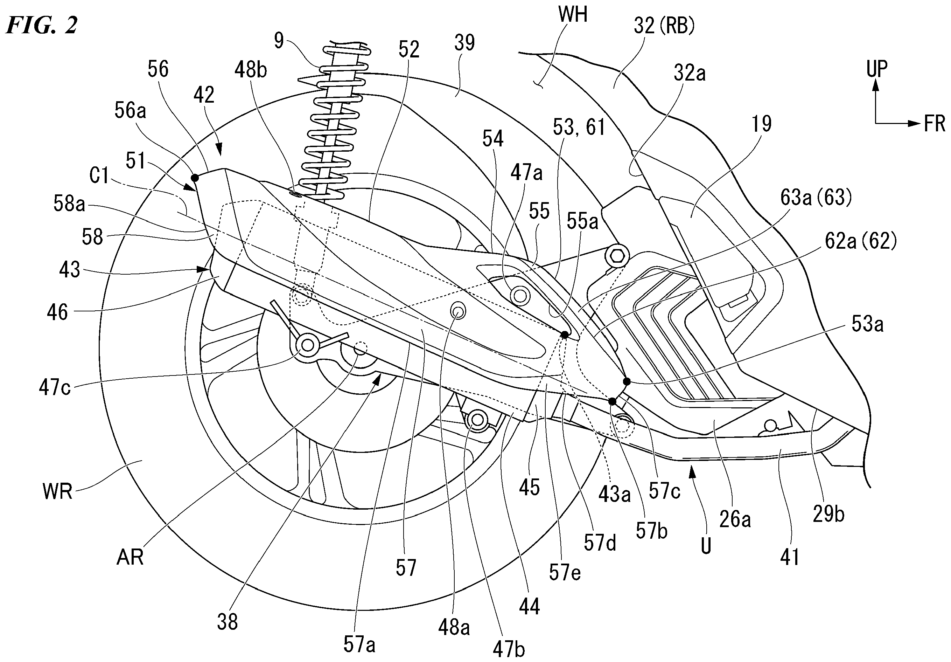

The muffler main body 43 and thus the muffler 42 are integrally swingably mounted on the power unit U by connecting the front end portions thereof to the exhaust pipe 41 and fastening a plurality of mount brackets 47a, 47b, and 47c to the auxiliary arm 38. The motorcycle 1 shown in FIGS. 1 and 2 shows, for example, an empty vehicle 1G state. In the illustrated state, the muffler 42 is in a posture in which the axis C1 is inclined rearward and upward.

### <Muffler cover>

As shown in FIGS. 5 to 8, the muffler cover 51 has a length exceeding front and rear ends of the muffler main body 43 and extends in a direction of the axis C1. The muffler cover 51 covers a range extending from above the muffler main body 43 to the outside in the vehicle width direction with a substantially constant gap.

An upper surface portion 52 of the muffler cover 51 which covers the muffler main body 43 from above forms an inner edge 52a on the inner side in the vehicle width direction. The inner edge 52a extends substantially along the axis C1 (specifically, it is inclined to be slightly located inward in the vehicle width direction as it goes toward the rear side thereof) in a plan view. The inner edge 52a is located inward in the vehicle width direction with respect to the axis C 1 in a plan view. An inner eaves portion 52b which covers the vicinity of the mount bracket 47a from above protrudes inward in the vehicle width direction at a portion of the upper surface portion 52 which overlaps the mount bracket 47a.

The upper surface portion 52 is inclined upward (forward and upward, rearward and downward) with respect to the axis C 1 in a side view at a portion thereof forming the inner eaves portion 52b, and is also inclined downward (forward and downward, rearward and upward) with respect to the axis C1 in front of the mount bracket 47a. Hereinafter, among these inclined portions, the latter (the inclined portion in front of the mount bracket 47a) is referred to as a rearward and upward inclined portion 53, and the former (a portion forming the inner eaves portion 52b) is referred to as a rearward and downward inclined portion 54. A front end 53a of the rearward and upward inclined portion 53 is located in front of a front end of the muffler main body 43. The front end 53a of the rearward and upward inclined portion 53 is located above the axis C1 in a side view. A flow straightening structure 61 which will be described later is formed on an inner edge portion 53b of the rearward and upward inclined portion 53 on the inner side in the vehicle width direction.

A triangular opening portion 55a which is long in the forward and rearward direction in accordance with a ridge portion 55 in a side view is formed in the ridge portion 55 uplifted by both the inclined portions 53 and 54 on the upper surface portion 52. The opening portion 55a passes through the ridge portion 55 in the vehicle width direction, and enables a fastening work to the mount bracket 47a from the outside in the vehicle width direction. A rear end of the upper surface portion 52 is located behind the rear end portion (the end cap 46) of the muffler main body 43 in the forward and rearward direction of the muffler. A rear end eaves portion 56 which is inclined downward with respect to the axis C1 in a side view is formed at a rear end portion of the upper surface portion 52.

A side surface portion 57 of the muffler cover 51 which covers the muffler main body 43 from the side forms a rearward and upward lower edge 57a along the axis C1 on the lower side thereof. The lower edge 57a is located below the axis C1 in a side view. A rear end of the lower edge 57a extends to a position at which it overlaps the rear end portion (the end cap 46) of the muffler main body 43 in a side view. A side surface inclined portion 58 inclined inward in the vehicle width direction with respect to the axis C1 in a plan view is formed at a rear end portion of the side surface portion 57. The side surface inclined portion 58 is formed continuously with the rear end eaves portion 56, and the side surface inclined portion 58 and the rear end eaves portion 56 reduce a diameter of the rear end portion of the muffler cover 51 in a tapered shape. A rear end edge 58a of the side surface inclined portion 58 is inclined and extends upward from the rear end of the lower edge 57a in a side view to be located rearward toward the upper side in the vertical direction of the muffler. The rear end edge 58a of the side surface inclined portion 58 is connected to a rear end edge 56a of the rear end eaves portion 56 of the upper surface portion 52. The rear end edge 56a of the upper surface portion 52 and the rear edge 58a of the side surface portion 57 form a continuous rear end edge of the muffler cover 51.

A front portion 57d of the lower edge 57a is bent upward on the rear side of the front end portion (the front cap 45) of the muffler main body 43 in a side view, and is bent inward in the vehicle width direction in a plan view. A front portion 57e of the side surface portion 57 is inclined inward in the vehicle width direction in a plan view in accordance with a slope of the front portion of the lower edge 57a inward in the vehicle width direction. A front end 57b of the lower edge 57a is located in front of the front end portion of the muffler main body 43. The front end 57b of the lower edge 57a is located above the axis C1 in a side view. A front end edge 57c extends upward and inward from the front end 57b of the lower edge 57a in the vehicle width direction. The front end edge 57c is inclined to be located forward toward the upper side in the vertical direction of the muffler in a side view. The front end edge 57c is connected to the front end 53a of the rearward and upward inclined portion 53. The front end edge 57c is also a front end edge of the muffler cover 51.

### <Flow straightening structure>

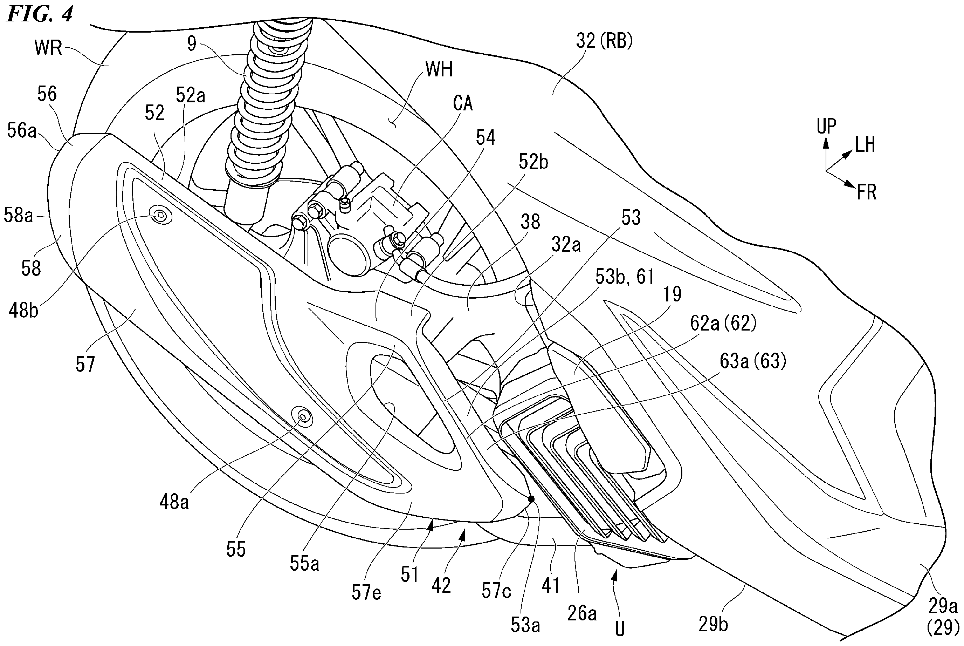

As shown in FIGS. 2 to 4, the flow straightening structure 61 which receives a traveling wind and generates a predetermined flow velocity is provided on a front upper portion (the rearward and upward inclined portion 53) of the muffler cover 51. The flow straightening structure 61 serves as a canard which causes a fast-flowing vortex to flow to the right side of the tire house WH, in which the rear wheel WR is disposed, on the lower rear side of the rear body RB, and suctions out air in the tire house WH by a negative pressure of the vortex. Thus, generation of a positive pressure in the tire house WH is curbed, and an influence of turbulence of air flowing around the rear wheel WR on peripheral components is curbed.

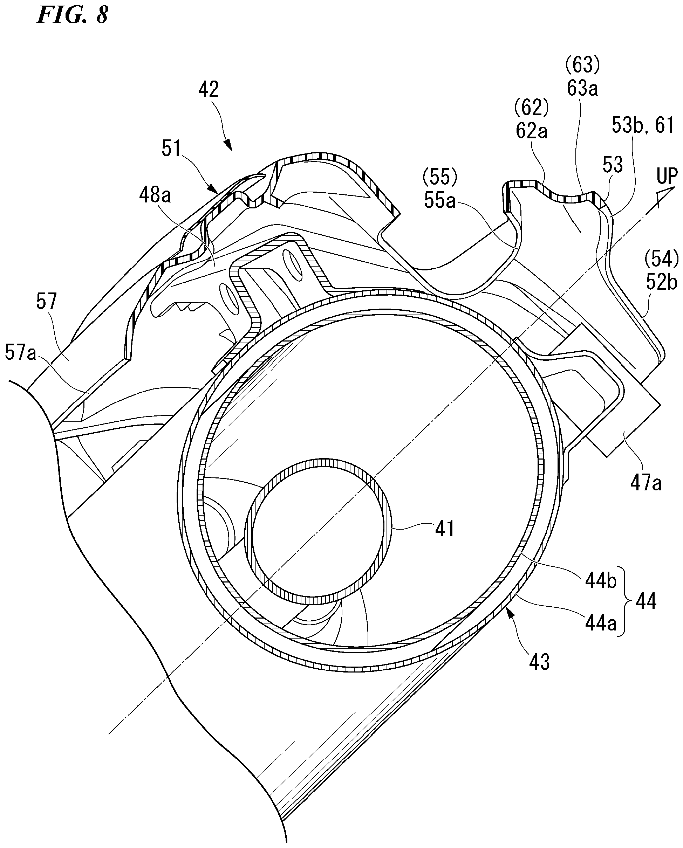

FIG. 8 shows a cross section orthogonal to a longitudinal direction of the flow straightening structure 61 in a side view.

The flow straightening structure 61 has a wall portion having an L-shaped cross section in the rearward and upward inclined portion 53 of the muffler cover 51 to extend in a tangential direction of the rear wheel WR in a side view. For example, the flow straightening structure 61 has a groove shape which extends along the rearward and upward inclined portion 53 in a side view. The flow straightening structure 61 includes an inclined portion 62 which forms a traveling wind receiving surface 62a which is inclined and extends rearward and upward in a side view and receives the traveling wind, and a rib-shaped protruding portion 63 which extends along the inclined portion 62 and protrudes upward from the traveling wind receiving surface 62a at an even height. The flow straightening structure 61 is inclined rearward and upward in the side view, and is inclined to be located inward in the vehicle width direction toward the rear in a plan view.

The flow straightening structure 61 is provided on the rearward and upward inclined portion 53 among the front and rear inclined portions (the rearward and upward inclined portion 53 and the rearward and downward inclined portion 54) of the triangular ridge portion 55 in a side view. The flow straightening structure 61 has an inclined portion 62 and a rib 63 on the inner edge portion 53b on the inner side of the rearward and downward inclined portion 53 in the vehicle width direction. The rib 63 is bent upward and extends from an inner edge of the inclined portion 62 on the inner side in the vehicle width direction. The rib 63 extends along the rearward and upward inclined portion 53.

The inner eaves portion 52b which covers the vicinity of the mount bracket 47a from above is provided on the inner side of the rearward and downward inclined portion 54 in the vehicle width direction to protrude in a flush manner. The inner eaves portion 52b is provided behind the rearward and upward inclined portion 53 (to avoid the rearward and upward inclined portion 53 in the forward and rearward direction). The flow straightening structure 61 is provided in front of the rearward and downward inclined portion 54 (to avoid the rearward and downward inclined portion 54 in the forward and rearward direction). The portion forming the flow straightening structure 61 is the rearward and upward inclined portion 53, and the portion forming the inner eaves portion 52b is the rearward and downward inclined portion 54. The inner eaves portion 52b and the flow straightening structure 61 are separated from each other in the forward and rearward direction.

The traveling wind flowing along the flow straightening structure 61 flows from a rear end of the rearward and upward inclined portion 53 in an extending direction of the rearward and upward inclined portion 53. This traveling wind is used for air flow control which will be described later. The rearward and downward inclined portion 54 is connected behind a rear end of the rearward and upward inclined portion 53. Some of the traveling wind flowing along the rearward and upward inclined portion 53 flow along the rearward and downward inclined portion 54. Thus, separation of the traveling wind at the rear end of the rearward and upward inclined portion 53 is curbed. The inner eaves portion 52b is provided on the inner side of the rearward and downward inclined portion 54 in the vehicle width direction to protrude in a flush manner. Therefore, even when the traveling wind spreads inward in the vehicle width direction behind the flow straightening structure 61, the traveling wind flows along the inner eaves portion 52b. Therefore, the separation of the traveling wind at the rear end of the rearward and upward inclined portion 53 is curbed. The flow straightening structure 61 and the inner eaves portion 52b are separated from each other in the forward and rearward direction. Thus, when comparing with a case in which the flow straightening structure 61 and the inner eaves portion 52b are continuous over the front and rear inclined portions 53 and 54, a shape is simplified, and moldability is improved.

The flow straightening structure 61 is disposed at a position at which it overlaps a front end portion of the rear wheel WR in a side view. In the side view of FIG. 2, for example, the flow straightening structure 61 is inclined rearward and upward to follow a tangential direction of the outer circumference of the rear wheel WR. For example, the flow straightening structure 61 has a gently curved shape which is convex forward and upward in a side view. The flow straightening structure 61 extends at a steeper slope than a rearward and upward slope of the lower surface rear portion 29b of the step floor 29 in a side view. The flow straightening structure 61 extends at a steeper slope than a slope of the muffler main body 43 in a side view. The flow straightening structure 61 is provided from a position in front of and below a corner portion 43a to a position behind and above the corner portion 43a with respect to the corner portion 43a of the front upper end of the muffler main body 43 in a side view. The flow straightening structure 61 is provided to intersect an extension line of an upper edge of the muffler cover 51 in a side view. The flow straightening structure 61 is separated rearward of the front rear edge 32a of the rear body RB in a side view. In the explanation of this paragraph, the "flow straightening structure 61" can be read as the "rearward and upward inclined portion 53".

The front portion of the muffler 42 at which the flow straightening structure 61 is provided includes front portions of the muffler main body 43 and the muffler cover 51. The front portion of the muffler 42 is disposed to overlap the front end portion of the rear wheel WR (for example, a range between a front end of a wheel and a front end of a tire at a height of the rear wheel axle AR) in a side view. In the 1G state of FIG. 2, the front end portion of the rear wheel WR is located above the lower surface rear portion 29b of the step floor 29.

In a side view, an opening of the radiator cover 26a is disposed between the flow straightening structure 61 and the front rear edge 32a of the rear body RB. The exhaust pipe 41 is disposed below the opening of the radiator cover 26a in a side view to bypass the lower side of the opening of the radiator cover 26a. A rear end portion of the exhaust pipe 41 is connected to a front end portion of the muffler main body 43 below the front end portion of the rear wheel WR in a side view.

The flow straightening structure 61 (and the entire muffler 42) is disposed to be spaced apart to the right side from a right end surface of the rear wheel WR in a plan view. The flow straightening structure 61 is inclined with respect to the forward and rearward direction of the vehicle so that it is located inward in the vehicle width direction toward the rear side in a plan view. The flow straightening structure 61 has a curved shape which is convex outward and rearward in the vehicle width direction, for example, in a plan view. In other words, the inner edge portion 53b on the inner side of the rearward and upward inclined portion 53 in the vehicle width direction is formed to have a concave shape in a plan view. The flow straightening structure 61 is disposed to intersect the front end portion of the muffler main body 43 in a plan view. The flow straightening structure 61 is disposed outside the axis C1 of the muffler main body 43 in the vehicle width direction in a plan view. The flow straightening structure 61 is disposed within a left and right width of the muffler main body 43 in a plan view.

As shown in FIG. 8, in the cross-sectional view of the flow straightening structure 61, the protruding portion 63 is formed so that a height thereof increases as it is located inside the inclined portion 62 in the vehicle width direction. The protruding portion 63 forms a traveling wind guide surface 63a of which a height increases toward the inside of the inclined portion 62 in the vehicle width direction. Thus, the traveling wind guided by the protruding portion 63 can flow stably. The protruding portion 63 of the flow straightening structure 61 of the present embodiment extends in an arc-shaped cross-sectional shape to be continuous with the inclined portion 62.

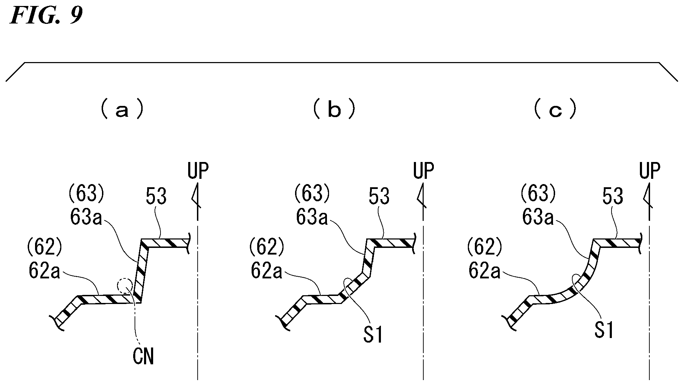

FIG. 9(a) shows a case (a comparative example) in which a corner portion CN having a substantially right angle is formed at a base of the protruding portion 63, FIG. 9(b) shows a case (a comparative example) in which an inclined surface S1 is formed at the base of the protruding portion 63, and FIG. 9(c) shows a case (the present embodiment) in which a curved surface S2 is formed at the base of the protruding portion 63.

In the example of FIG. 9(a), since a swirling vortex is generated in the corner portion CN of the base of the protruding portion 63, it tends to hinder flow straightening of the traveling wind. In the example of FIG. 9(b), since the traveling wind rises on the inclined surface S1 at the base of the protruding portion 63, generation of the vortex as shown in FIG. 9(a) is curbed, and a prescribed vortex over the inclined portion 62 and the protruding portion 63 is likely to occur. In the example of FIG. 9(c), since the traveling wind rises along the arc-shaped curved surface S2 extending over the inclined portion 62 and the protruding portion 63, a vortex is more likely to occur than in the example of FIG. 9(b).

A steady flow (a vortex swirling in the flow straightening structure 61) over the inclined portion 62 and the protruding portion 63 flows in an extending direction of the flow straightening structure 61 to form a spiral flow having strong directivity, and passes by the side of the tire house WH of the rear wheel WR. At this time, an effect in which turbulence in the tire house WH is pushed out can be obtained by a negative pressure of the vortex.

### <Operation>

Next, an operation of the flow straightening structure 61 of the present embodiment will be described.

When the motorcycle 1 travels, turbulence is generated in the tire house WH of the rear wheel WR because the rear wheel WR winds up air. The air which is wound up and circulated by the rear wheel WR collides with the power unit U, the rear fender 31, and the like and then becomes an air flow which swells to the side of the vehicle body. Further, the turbulence in the tire house WH may affect the peripheral components of the tire house WH. For example, when the air flow on a side surface of the air cleaner 25 is pushed outward in the vehicle width direction, it becomes a factor which hinders stable air suction. That is, it disturbs an air flow around the suction port 25c of the air cleaner 25 and causes a decrease in an intake amount.

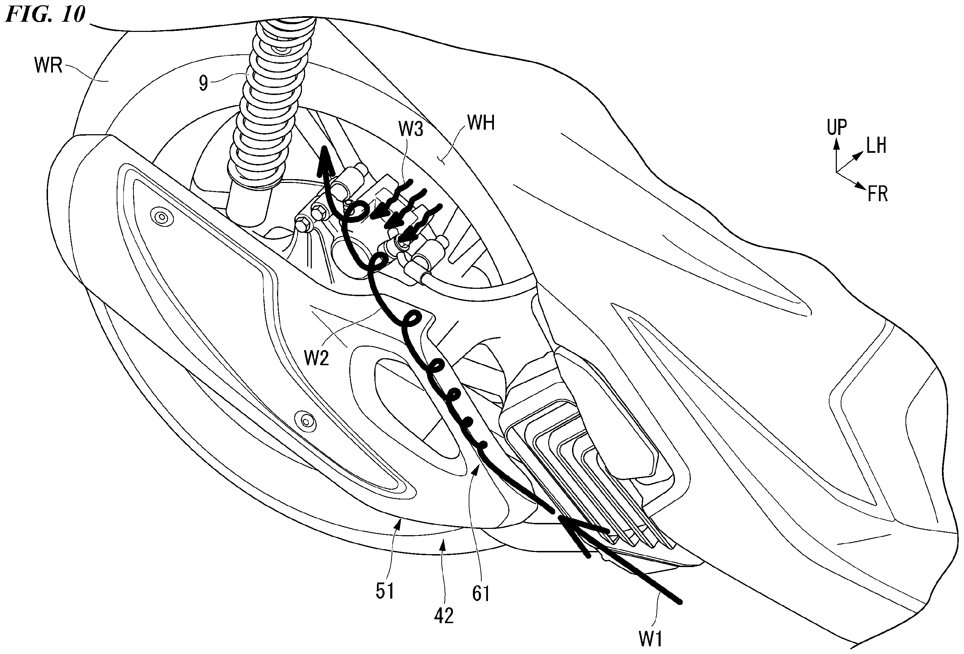

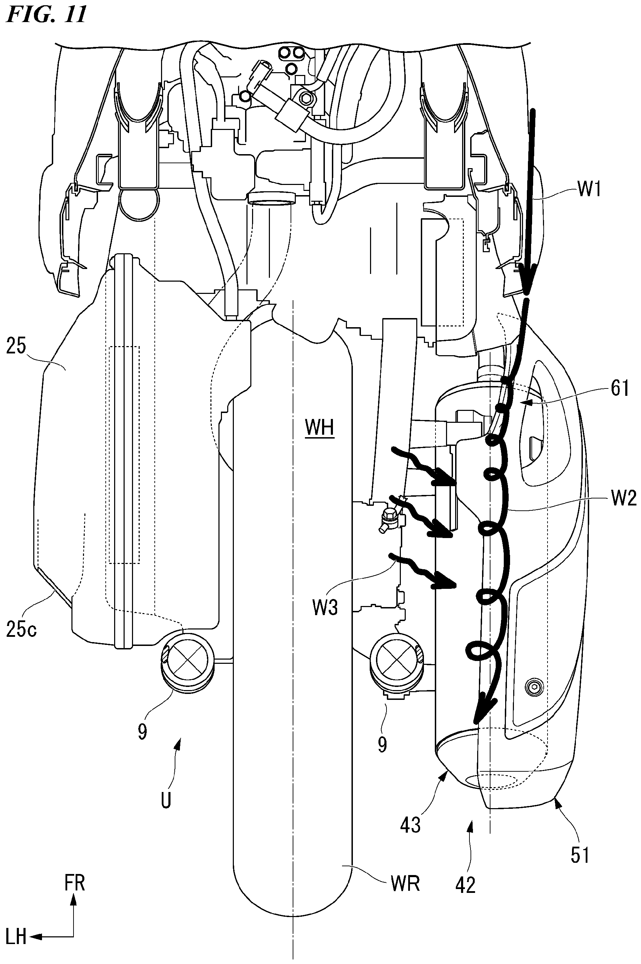

On the other hand, as shown in FIGS. 10 and 11, on the muffler 42 side opposite to the air cleaner 25, the traveling wind W1 comes into contact with the traveling wind receiving surface 62a of the flow straightening structure 61 located on the side of the front portion of the tire house WH, and the traveling wind is guided by the inclined portion 62 and the protruding portion 63 to generate a fast-flowing and fine vertical vortex W2. The flow straightening structure 61 straightens the traveling wind W1 to generate the vertical vortex W2 having an increased flow velocity, and causes the vertical vortex W2 to flow directionally to the side of the rear wheel WR and the tire house WH. Thus, the turbulence generated in the tire house WH is actively pushed out to the muffler 42 side (an arrow W3), the pushing of the turbulence to the side opposite to the muffler 42 (the air cleaner 25 side) is reduced, and a decrease in air suction efficiency of the intake system components is curbed.

That is, in the present embodiment, it is possible to increase the air suction efficiency of the intake system components (to ensure the intake amount) by pushing out the air flow in the tire house WH to the muffler 42 side opposite to the air cleaner 25 (the suction port 25c) in the vehicle width direction and curbing deviation of the air flow on the air cleaner 25 side from the suction port 25c.

For example, when a protruding portion or the like for air flow control is provided on the inner fender 39 of the rear wheel WR, the protruding portion or the like can be miniaturized to increase a degree of freedom in exterior. It is not necessary to separately provide a hugger fender or the like for air flow control, and it is possible to curb an increase in cost and weight.

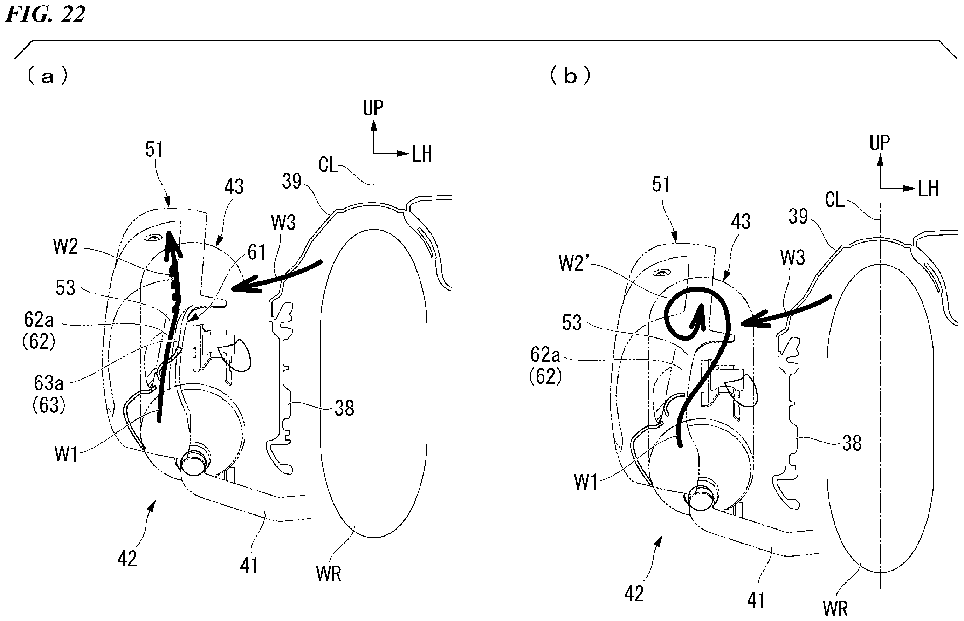

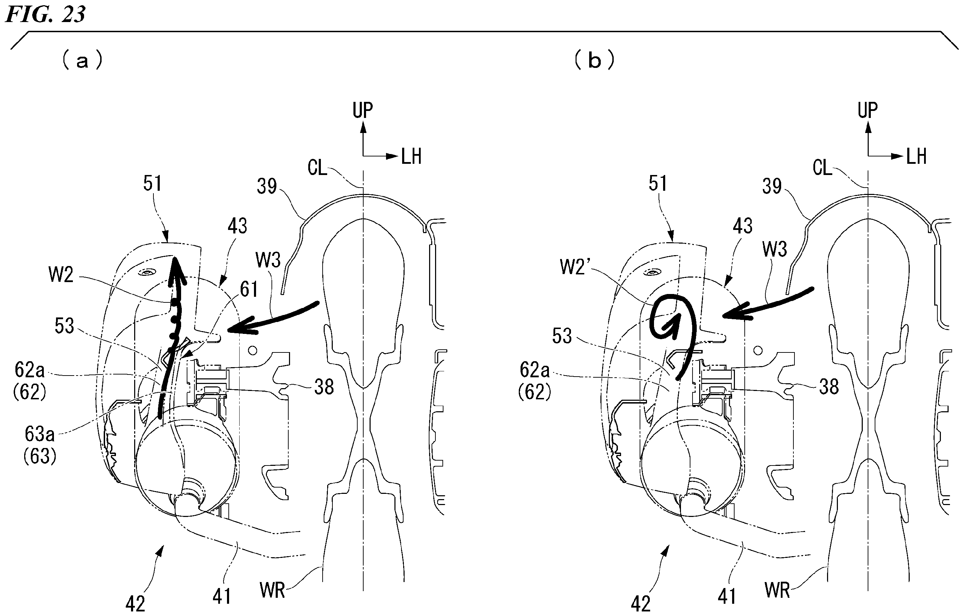

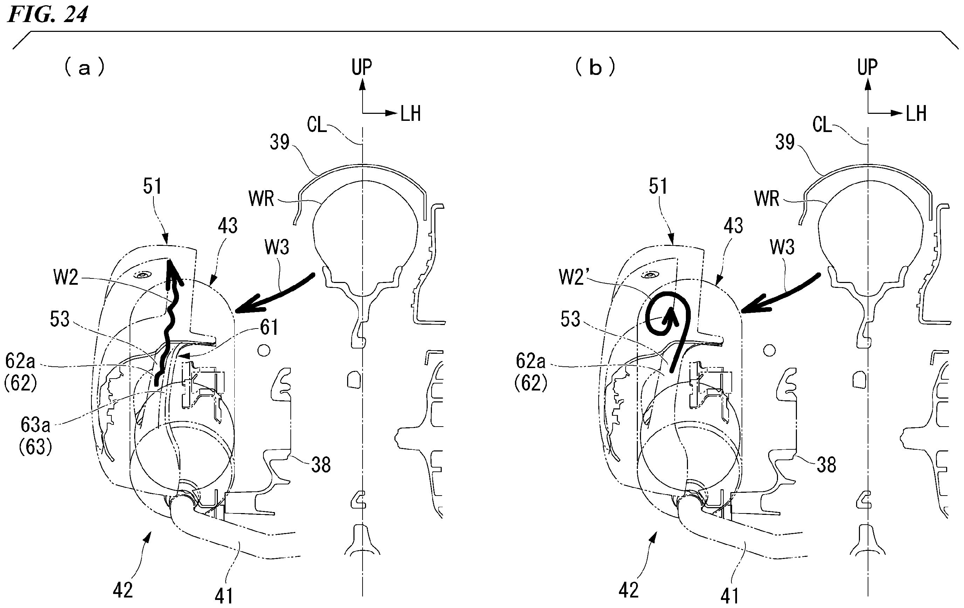

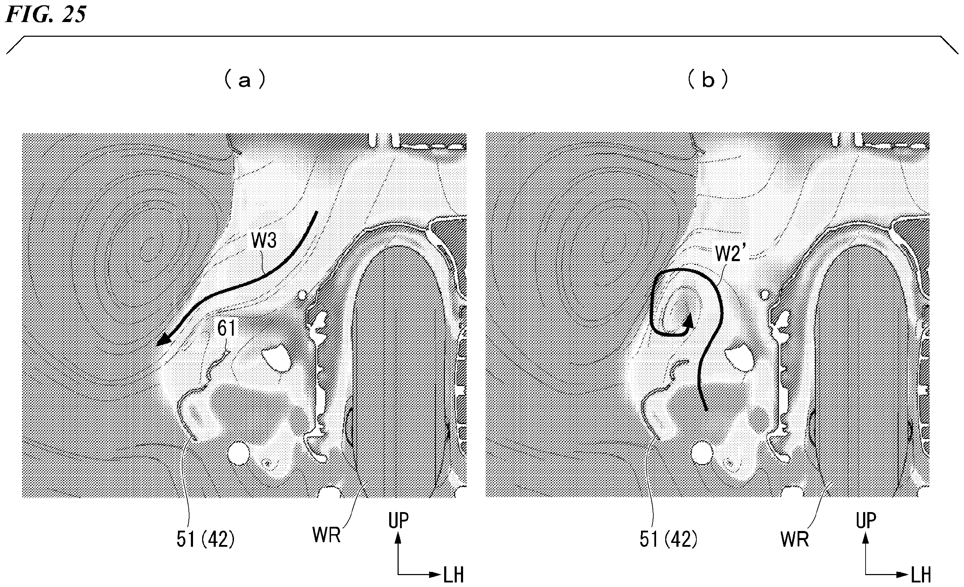

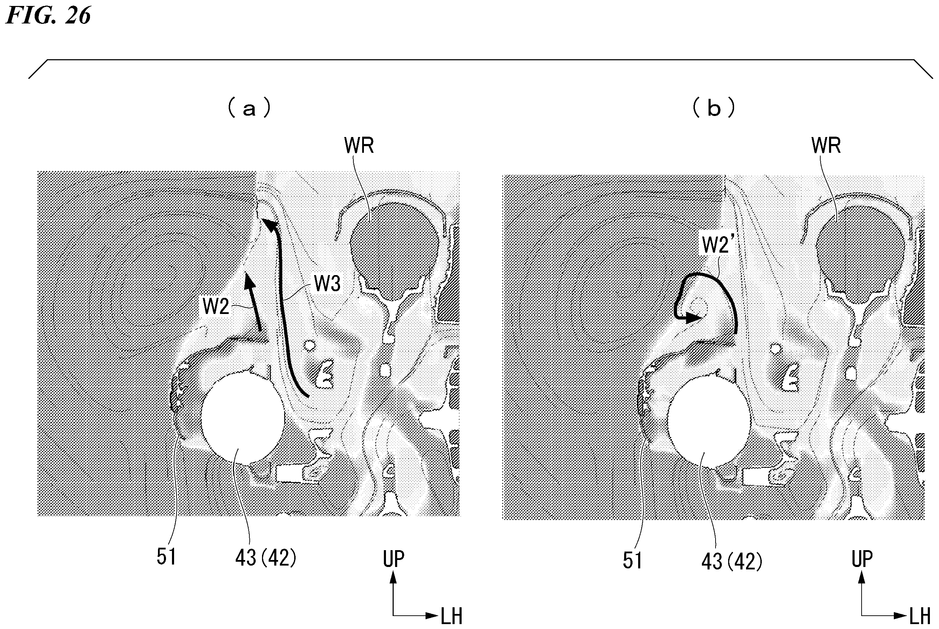

FIGS. 22 to 24 are views showing the operation of the flow straightening structure 61 together with comparative examples. FIG. 22 shows a cross-sectional view corresponding to a front end position of the flow straightening structure 61, FIG. 23 shows a cross-sectional view corresponding to a front and rear intermediate position of the flow straightening structure 61, and FIG. 24 shows a cross-sectional view corresponding to a rear position past the flow straightening structure 61. FIGS. 25 and 26 are views showing fluid analysis results of the flow straightening structure 61 together with comparative examples, which correspond to FIGS. 22 and 24. (a) in each of the drawings shows an embodiment equipped with the flow straightening structure 61, and (b) in each of the drawings shows a comparative example which is not equipped with the flow straightening structure 61.

In the comparative examples shown in FIGS. 22(b) to 24(b), 25(b), and 26(b), the traveling wind W1 which has reached the vicinity of the muffler 42 causes the following operations when it flows around the muffler cover 51. That is, since the traveling wind W1 flowing through a position corresponding to the flow straightening structure 61 of the embodiment (the rearward and upward inclined portion 53 of the front upper portion of the muffler cover 51) does not have a guide such as the protruding portion 63, the traveling wind W1 collides with an air flow W3 pushed out from the inside of the tire house WH located inward in the vehicle width direction to generate a vortex W2'. This vortex W2' may continue even after passing a position corresponding to the flow straightening structure 61 (refer to FIGS. 24(b) and 26(b)), and may eventually affect the air suction of the air cleaner 25 located on the side opposite to the muffler 42 in the vehicle width direction.

On the other hand, in the embodiments shown in FIGS. 22(a) to 24(a) and FIGS. 25(a) and 26(a), the traveling wind W1 which has reached the vicinity of the muffler 42 causes the following operations when it flows around the muffler cover 51. That is, the traveling wind W1 flowing through the flow straightening structure 61 flows to the right side of the tire house WH as a fast-flowing vortex W2, and the air flow W3 pushed out from the inside of the tire house WH is suctioned out by the negative pressure of the vortex W2. Thus, the air in the tire house WH smoothly flows to the muffler 42 side. This vortex W2 continues even at the rear position past the flow straightening structure 61(refer to FIGS. 24(a) and 26(a)), and curbs the influence on the air suction of the air cleaner 25 located on the side opposite to the muffler 42 in the vehicle width direction. Behind the flow straightening structure 61, there is no vortex W2' as in the comparative example, and there is only the flow toward the rear of the vehicle.

As described above, the flow straightening structure of the saddle-riding type vehicle in the above-described embodiment is the flow straightening structure 61 of the motorcycle 1 with the muffler 42, which silences the exhaust gas of the engine E, on the side of the rear wheel WR, the muffler 42 includes the muffler main body 43 and the muffler cover 51 mounted on the muffler main body 43, and the muffler cover 51 includes the inclined portion 62 which extends to be inclined with respect to the vehicle forward and rearward direction and forms the traveling wind receiving surface 62a that receives the traveling wind, and the protruding portion 63 which extends along the inclined portion 62 and protrudes upward from the traveling wind receiving surface 62a.

With such a configuration, the traveling wind flowing along the traveling wind receiving surface 62a of the inclined portion 62 is guided by the protruding portion 63 and flows in a predetermined direction with directivity. The effect in which the air in the tire house WH is pushed out to the side of the rear wheel WR is obtained by causing the traveling wind with such directivity in this way to flow to the side of the rear wheel WR (the side of the tire house WH). The air in the tire house WH flows around the rear wheel WR and causes turbulence, but an influence of the air flow on the vicinity of the rear wheel WR (particularly, the vicinity of the suction port 25c of the air cleaner) can be curbed by pushing out this turbulence toward the side of the rear wheel WR.

In the flow straightening structure of the saddle-riding type vehicle, the muffler 42 extends along the axis C1, the upper surface portion 52 of the muffler 42 includes the rearward and upward inclined portion 53 which is inclined rearward and upward with respect to the axis C1 in a side view, and the rearward and upward inclined portion 53 includes the inclined portion 62 and the protruding portion 63 to form the flow straightening structure 61.

With such a configuration, since the flow straightening structure 61 is provided on the rearward and upward inclined portion 53, it becomes easy to form the traveling wind receiving surface 62a. The traveling wind flowing along the traveling wind receiving surface 62a is guided by the protruding portion 63 and can flow in a predetermined direction with directivity.

In the flow straightening structure of the saddle-riding type vehicle, the rib-shaped protruding portion 63 which is bent and extends upward from the inclined portion 62 in the flow straightening structure 61 is provided on the inner edge portion 53b on the inner side of the rearward and upward inclined portion 53 in the vehicle width direction.

With such a configuration, since the rib-shaped protruding portion 63 of the flow straightening structure 61 is provided on the inner edge portion 53b of the rearward and upward inclined portion 53, spread of the traveling wind inward in the vehicle width direction is curbed. Thus, the traveling wind flowing along the traveling wind receiving surface 62a can be caused to flow in a predetermined direction with directivity while the spread of the traveling wind inward in the vehicle width direction is curbed.

In the flow straightening structure of the saddle-riding type vehicle, the rearward and downward inclined portion 54 which is connected to the rear of the rearward and upward inclined portion 53 and is inclined rearward and downward with respect to the axis C1 in a side view is provided, and the flow straightening structure 61 is provided on the rearward and upward inclined portion 53 while avoiding the rearward and downward inclined portion 54.

With such a configuration, since the flow straightening structure 61 is provided only on the rearward and upward inclined portion 53 of the front and rear inclined portions 53 and 54, the flow straightening structure 61 can be easily formed. When the flow straightening structure 61 is provided over the front and rear inclined portions 53 and 54, the shape of the flow straightening structure 61 and its surroundings becomes complicated. The shape of the flow straightening structure 61 and the like can be simplified and easily formed by providing the flow straightening structure 61 while avoiding the rearward and downward inclined portion 54.

In the flow straightening structure of the saddle-riding type vehicle, the inner eaves portion 52b is provided inside the rearward and downward inclined portion 54 in the vehicle width direction to protrude in a flush manner to avoid the rearward and upward inclined portion 53.

With such a configuration, since the inner eaves portion 52b is provided in the flush manner inside the rearward and downward inclined portion 54 in the vehicle width direction, it becomes difficult for the traveling wind to separate behind the flow straightening structure 61. When the traveling wind spreads inward in the vehicle width direction behind the flow straightening structure 61, the traveling wind easily flows along the inner eaves portion 52b. Since the inner eaves portion 52b is provided to avoid the rearward and upward inclined portion 53, the inner eaves portion 52b can be easily formed. When the inner eaves portion 52b is provided over the front and rear inclined portions 53 and 54, the shape of the inner eaves portion 52b and its surroundings becomes complicated. The shape of the inner eaves portion 52b and the like can be simplified and easily formed by providing the inner eaves portion 52b while avoiding the rearward and upward inclined portion 53. Since the inner eaves portion 52b is separated from the flow straightening structure 61 in the forward and rearward direction, the shapes of the inner eaves portion 52b, the flow straightening structure 61, and the like can be simplified and easily formed in this respect as well.

In the flow straightening structure of the saddle-riding type vehicle, the motorcycle 1 includes the power unit U in which the engine E and the rear wheel WR swing integrally with the vehicle body frame F.

With such a configuration, since a variety of auxiliary equipment such as the air cleaner 25 is mounted in the power unit U, the influence of the turbulence in the tire house WH is large, but the influence of the air flow on the auxiliary equipment can be curbed by pushing out this turbulence to the side of the rear wheel WR.

In the flow straightening structure of the saddle-riding type vehicle, the air cleaner 25 is provided in the intake system component which suctions air into the engine E, the air cleaner 25 has the suction port 25c located furthest upstream, the muffler 42 is disposed on one side of the rear wheel WR, and the suction port 25c is disposed on the other side of the rear wheel WR.

With such a configuration, the side which pushes out the air in the tire house WH toward the side of the rear wheel WR by the inclined portion 62 and the protruding portion 63 of the muffler 42 becomes the side opposite to the suction port 25c of the intake system component by separately disposing the muffler 42 and the suction port 25c with the rear wheel WR interposed therebetween. When there is the suction port 25c on the side on which the air in the tire house WH is circulated around the rear wheel WR and pushed out to the side the rear wheel WR, the intake amount of the intake system component may be affected. On the other hand, since the side on which the air in the tire house WH is pushed out is the side opposite to the suction port 25c, the pushed-out air flow does not affect the suction port 25c, and the air flow pushed out to the suction port 25c side is also reduced. Thus, the air suction efficiency of the intake system component can be maintained well. In addition, an influence of exhaust heat on the air suction of the intake system component can be curbed.

In the flow straightening structure of the saddle-riding type vehicle, the inclined portion 62 and the protruding portion 63 are inclined to be located upward toward the rear in a side view of the vehicle.

With such a configuration, the turbulence in the tire house WH can be pushed outward by causing the traveling wind to flow upward along the inclined portion 62 and the protruding portion 63. That is, in the tire house WH, since an entrainment wind is likely to be generated between the vehicle body cover 27 and the other members on the upper side, the turbulence in the tire house WH can be effectively curbed by causing the traveling wind to flow upward.

In the flow straightening structure of the saddle-riding type vehicle, the inclined portion 62 and the protruding portion 63 are inclined to be located inward in the vehicle width direction toward the rear in an upper view of the vehicle.

With such a configuration, in the tire house WH, since air tends to be circulated around the rear wheel WR and causes the turbulence, the air around the rear wheel WR can be easily pushed out to the side of the rear wheel WR, and the turbulence in the tire house WH can be effectively curbed by causing the traveling wind to flow toward the inner side in the vehicle width direction (the rear wheel WR side).

In the flow straightening structure of the saddle-riding type vehicle, the protruding portion 63 is formed to be located upward toward the inside of the inclined portion 62 in the vehicle width direction.

With such a configuration, since the protruding portion 63 which stands above the inclined portion 62 is located upward toward the inner side in the vehicle width direction, the traveling wind guided by the protruding portion 63 tends to generate a prescribed vortex, and the turbulence in the tire house WH can be effectively curbed.

In the flow straightening structure of the saddle-riding type vehicle, the inclined portion 62 and the protruding portion 63 extend to have an arc-shaped cross-sectional shape.

With such a configuration, since the inclined portion 62 and the protruding portion 63 have the arc-shaped cross-sectional shape, the air flow guided by the protruding portion 63 is more likely to generate a prescribed vortex, and the turbulence in the tire house WH can be curbed more effectively.

### <Example>

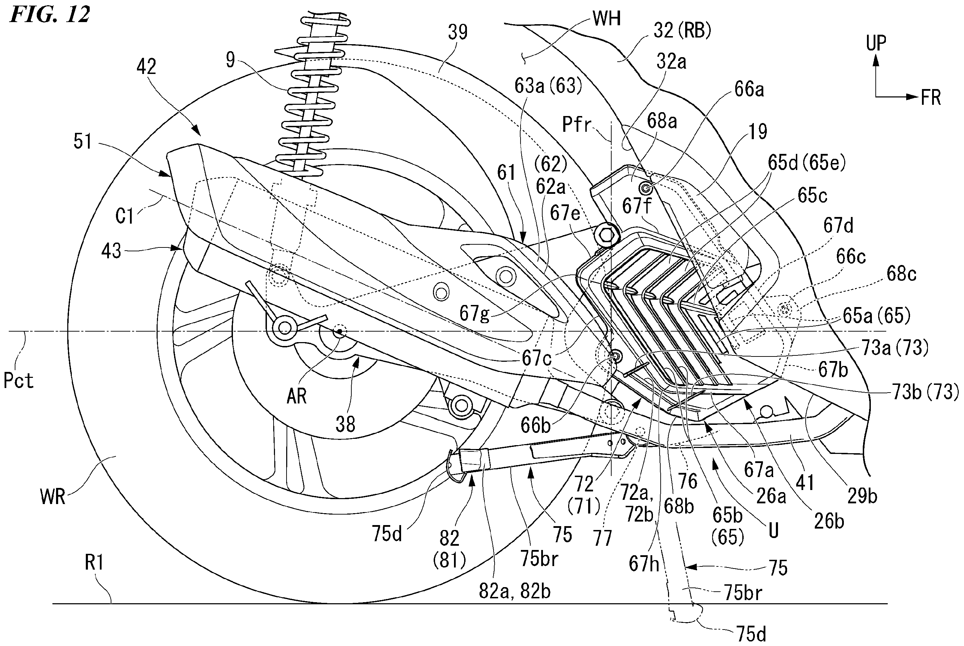

Next, an example will be described with reference to FIGS. 12 to 19.

This example is particularly different from the above-described embodiment (the first embodiment) in that flow straightening structures 71 and 81 are also provided on the radiator cover (a cover member) 26a and the main stand 75. Other same configurations as those of the first embodiment are designated by the same reference numerals, and a detailed description thereof will be omitted.

In a motorcycle, when the crankshaft (not shown) rotates by driving the engine E and a cooling fan (not shown) mounted on a right end portion of the crankshaft rotates, external air is taken into the inside of the cover from an external air introduction port 65 of the radiator cover 26a. Cooling water flowing through the radiator 26 is cooled and used for engine cooling by supplying the external air to the radiator 26 inside the cover.

As shown in FIG. 12, the radiator cover 26a is provided to cover the radiator 26 (refer to FIG. 3) disposed on the right side of the crankcase 21 from the outside in the vehicle width direction. The radiator cover 26a is fastened and fixed to the right end portion of the crankcase 21 at three locations, for example, an upper fastening portion 66a, a rear fastening portion 66b, and a front fastening portion 66c, for example, by bolts screwed from the outside in the vehicle width direction. The rear end portion of the radiator cover 26a protrudes rearward of the crankcase 21 and is disposed to overlap the front end portion of the rear wheel WR in a side view. A line R1 in the drawing indicates a road surface.

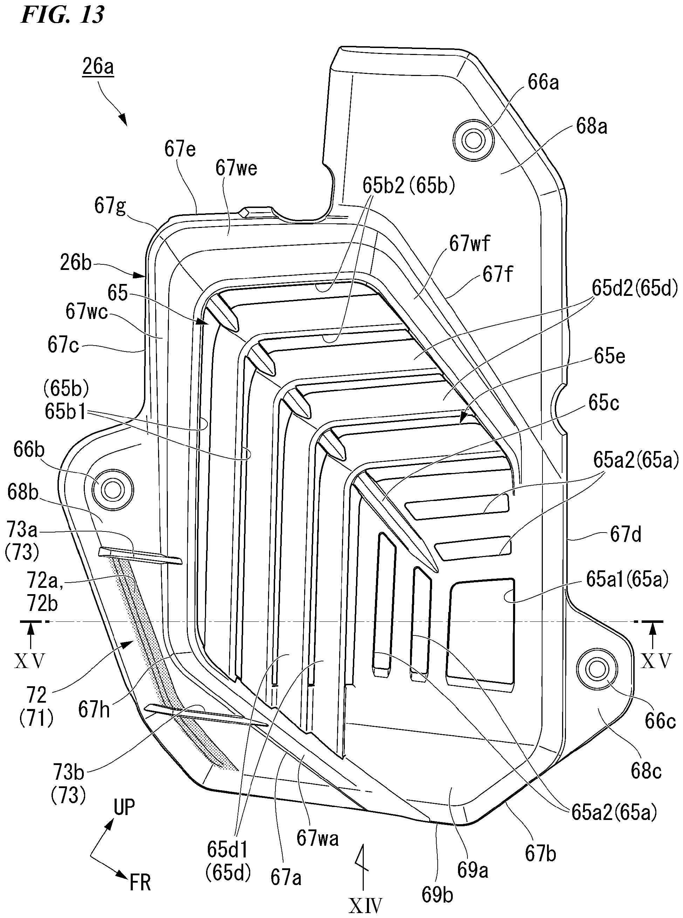

Also referring to FIG. 13, the radiator cover 26a forms the external air introduction port 65 in a range surrounded by the upper fastening portion 66a, the rear fastening portion 66b, and the front fastening portion 66c. Hereinafter, a shape of a posture of the radiator cover 26a in a state in which it is mounted on the vehicle body (a posture shown in FIG. 12) in a side view will be described.

A portion (hereinafter, referred to as a cover main body portion 26b) forming the external air introduction port 65 has a hexagonal shape having a first side portion 67a disposed substantially horizontally (including horizontality), a second side portion 67b which extends forward and upward from a front end portion of the first side portion 67a, a third side portion 67c which extends rearward and upward from a rear end portion of the first side portion 67a, a fourth side portion 67d which extends rearward and upward from an upper end portion of the second side portion 67b, a fifth side portion 67e which extends forward and upward from an upper end portion of the third side portion 67c, and a sixth side portion 67f which extends between upper end portions of the fourth side portion 67d and the fifth side portion 67e. The second side portion 67b is shorter than the third side portion 67c, and the fourth side portion 67d is longer than the fifth side portion 67e. The third side portion 67c and the fourth side portion 67d are substantially parallel (including parallel) to each other. The sixth side portion 67f is inclined forward and downward with respect to the first side portion 67a.

An upward extending portion 68a which extends upward is formed above the sixth side portion 67f. An upper fastening portion 66a is formed on an upper portion of the upward extending portion 68a.

A rearward and downward extending portion 68b which extends rearward and downward is formed behind and below a range extending from below the first side portion 67a to an upper and lower intermediate portion of the third side portion 67c. A rear fastening portion 66b is formed at an upper portion of the rearward and downward extending portion 68b, and the flow straightening structure 71 and a water blocking wall 73, which will be described later, are formed below the rear fastening portion 66b.

A forward and upward extending portion 68c which extends forward and upward is formed in front of and above a lower portion of the fourth side portion 67d. A front fastening portion 66c is formed at the forward and upward extending portion 68c.

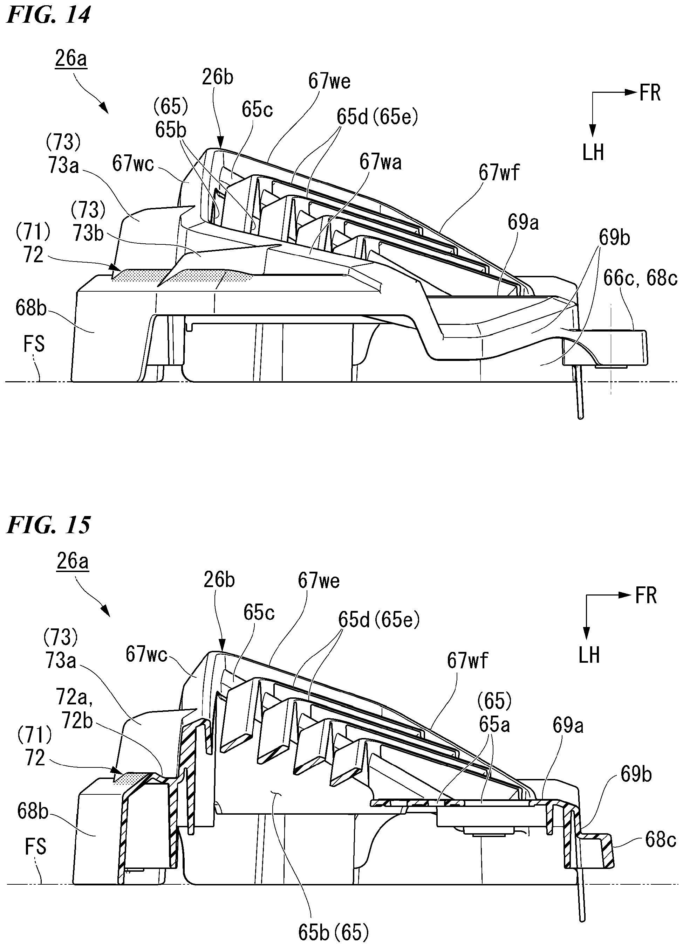

Also referring to FIGS. 14 to 16, the radiator cover 26a has a tray shape which opens inward in the vehicle width direction as a whole. Hereinafter, a wall portion of the radiator cover 26a which is substantially orthogonal (including orthogonal) to the vehicle width direction is referred to as a cover side wall portion 69a, and a wall portion thereof which stands inward in the vehicle width direction from a peripheral edge portion of the cover side wall portion 69a is referred to as a cover peripheral wall portion 69b.

A rear portion of the cover main body portion 26b is uplifted outward in the vehicle width direction with respect to the cover side wall portion 69a remaining in a front portion thereof. The rear portion of the cover main body portion 26b is formed to protrude outward (increase in depth) in the vehicle width direction toward the rear upper side with respect to the front portion forming the cover side wall portion 69a.

A rear outer portion of the cover main body portion 26b is formed along an inclined flat surface inclined forward and downward with respect to a flat surface (indicated by a line FS in FIGS. 14 and 15) orthogonal to the vehicle width direction. In the inclined flat surface, the vicinity of the second side portion 67b is located on the innermost side in the vehicle width direction, and a rear end corner portion 67g between the third side portion 67c and the fifth side portion 67e is inclined to be located on the outermost side in the vehicle width direction.

On the rear outer portion of the cover main body portion 26b, a first wind guide wall 67wa which extends from the first side portion 67a to follow a longitudinal direction, a third wind guide wall 67wc which extends from the third side portion 67c to follow the longitudinal direction, a fifth wind guide wall 67we which extends from the fifth side portion 67e to follow the longitudinal direction, and the sixth wind guide wall 67wf which extends from the sixth side portion 67f to follow the longitudinal direction are formed to stand up on the outside in the vehicle width direction. In each of the wind guide walls 67wa, 67wc, 67we, and 67wf, an outer surface which faces outward of each of the wind guide walls 67wa, 67wc, 67we, and 67wf is formed to be inclined with respect to an upright direction (the vehicle width direction) compared to an inner side surface which faces inward of each of the wind guide walls 67wa, 67wc, 67we, and 67wf and to taper toward an upright tip end side in a cross-sectional view intersecting a longitudinal direction of each of them (refer to FIG. 15).

Referring to FIG. 13, the external air introduction port 65 includes a front introduction port 65a formed in the cover side wall portion 69a of the front portion of the cover main body portion 26b, and a rear introduction port 65b formed in an outer portion of the rear portion of the cover main body portion 26b.

The front introduction port 65a has a rectangular first opening portion 65a1 formed with one side substantially parallel to the fourth side portion 67d, and a plurality of slit-shaped second opening portions 65a2 formed substantially parallel to each of the sides behind and above, and behind and below the front end opening. A front half portion of the front introduction port 65a overlaps the rear side cover 32 in a side view in a state in which it is mounted on the vehicle body (the rear side cover 32 is covered from the outside in the vehicle width direction. Refer to FIG. 12).

The rear introduction port 65b has a lower opening portion 65b1 having a parallelogram shape and located above the first side portion 67a and in front of the third side portion 67c, and an upper opening portion 65b2 having a parallelogram shape and located in front of the fifth side portion 67e and below the sixth side portion 67f. A partition wall 65c substantially parallel to the sixth side portion 67f is provided between the lower opening portion 65b1 and the upper opening portion 65b2. The partition wall 65c extends from a rear end corner portion 67g between the third side portion 67c and the fifth side portion 67e to the vicinity of the center of the cover side wall portion 69a of the front portion of the cover main body portion 26b.

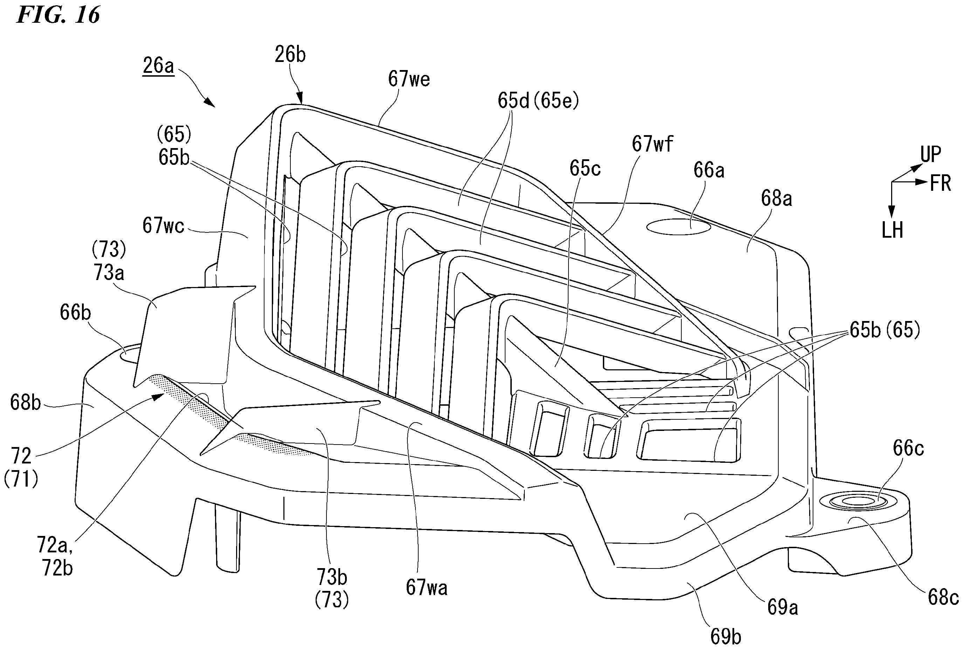

The rear introduction port 65b includes a louver 65e having a plurality of wing plates 65d. Each of the wing plates 65d includes a lower wing plate 65d1 substantially parallel to the third side portion 67c and an upper wing plate 65d2 substantially parallel to the fifth side portion 67e. Each of the wing plates 65d has a V-shape which is convex rearward in a side view by connecting the lower wing plate 65d1 to the upper wing plate 65d2. A bent portion between the lower wing plate 65d1 and the upper wing plate 65d2 of each of the wing plates 65d is connected to and supported by the partition wall 65c. Each of the wing plates 65d is inclined to be located forward toward the outside in the vehicle width direction with respect to the vehicle width direction (refer to FIGS. 15 and 16).

Referring to FIGS. 13 to 16, the flow straightening structure 71 and the water blocking wall 73 are formed below the rear fastening portion 66b on the rearward and downward extending portion 68b.

The flow straightening structure 71 includes a bead portion (a projection portion) 72 which extends from a rearward and upward inclined rear edge of the rearward and downward extending portion 68b in the longitudinal direction. The bead portion 72 is disposed to be close to a rear lower corner portion 67h between the first side portion 67a and the third side portion 67c. The bead portion 72 is inclined with respect to both the first side portion 67a and the third side portion 67c. A lower portion of the bead portion 72 is bent in the vicinity of a lower end of the rearward and downward extending portion 68b to be inclined. The bead portion 72 is located in front of and below the flow straightening structure 61 of the muffler 42 (refer to FIG. 12).

The bead portion 72 has a triangular peak shape in a cross-sectional view intersecting the longitudinal direction (refer to FIG. 15). The bead portion 72 protrudes outward in the vehicle width direction with respect to a remaining outer portion of the rearward and downward extending portion 68b. The bead portion 72 is located in front of a rear wheel front end position Pfr and is located below a rear wheel center height Pct (refer to FIG. 12). A front inclined surface 72b of the bead portion 72 which faces the front of the vehicle is a traveling wind receiving surface 72a which receives the traveling wind when the vehicle travels.

In such a configuration, when the motorcycle 1 travels and the traveling wind comes into contact with the traveling wind receiving surface 72a of the flow straightening structure 71 of the radiator cover 26a, the traveling wind flows along the traveling wind receiving surface 72a.

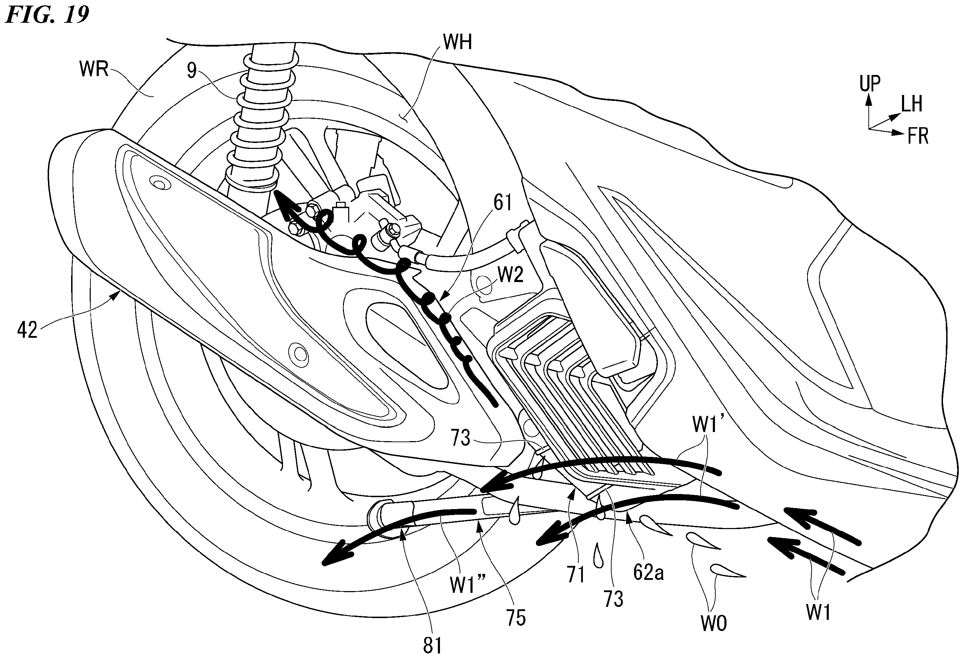

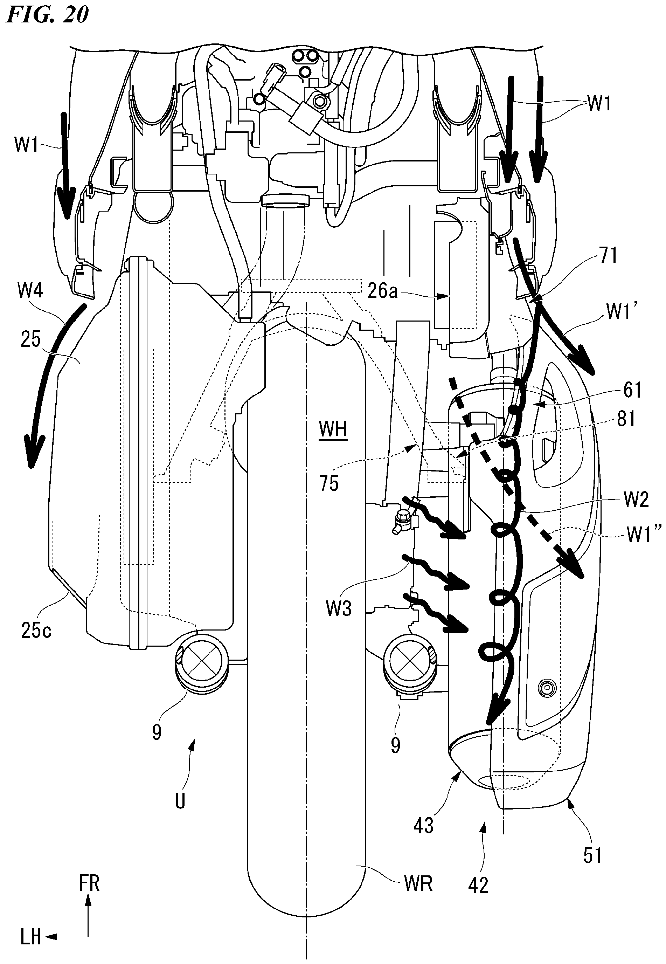

Referring to FIGS. 19 and 20, the traveling wind receiving surface 72a causes the traveling wind W1 to flow in a predetermined direction (outward in the vehicle width direction and below the muffler 42 in the example). That is, the traveling wind receiving surface 72a causes the traveling wind W1 to flow in a predetermined direction with directivity. The traveling wind W1 guided by the traveling wind receiving surface 72a is indicated by a reference numeral W1'.

Referring to FIGS. 13 to 16, the water blocking wall 73 includes a first unit water blocking wall 73a disposed at a height of an upper end of the bead portion 72, and a second unit water blocking wall 73b disposed at a height of a bent position of a lower portion of the bead portion 72. Each of the unit water blocking walls 73a and 73b has a plate shape substantially parallel to the vehicle width direction, and is disposed at an angle substantially orthogonal to the third side portion 67c in a side view. The unit water blocking walls 73a and 73b are parallel to each other and spaced apart from each other in the vertical direction.

Referring to FIG. 12, the unit water blocking walls 73a and 73b are inclined rearward and downward in a side view in a state in which they are mounted in the vehicle body. The unit water blocking walls 73a and 73b are located in front of the rear wheel front end position Pfr and below the rear wheel center height Pct.

Returning to FIGS. 13 to 16, a front end of the first unit water blocking wall 73a is connected to the third wind guide wall wc, and a front end of the second unit water blocking wall 73b is connected to the first wind guide wall 67wa. The first unit water blocking wall 73a has a higher standing height in the vehicle width direction than the second unit water blocking wall 73b. The standing heights of the unit water blocking walls 73a and 73b are different from each other so that standing tip ends thereof are located on the inclined flat surface.

In such a configuration, when the motorcycle 1 travels and rainwater or the like is splashed from a road surface R1, the rainwater or the like may scatter around the rear wheel WR and the muffler 42 behind the step floor 29, and may promote contamination of the periphery of the rear wheel WR and the muffler 42. On the other hand, the following effects can be obtained by providing the water blocking wall 73 with the wall surface facing forward and downward in front of the rear wheel WR and the muffler 42 behind the step floor 29.

As shown in FIG. 19, even when the splashed rainwater or the like WO tries to reach the rear wheel WR and the muffler 42, it collides with the downward wall surface of the water blocking wall 73 on the way and falls down. Thus, contamination of the periphery of the rear wheel WR and the muffler 42 is curbed.

In particular, when the splashed rainwater or the like WO reaches the flow straightening structure 61 of the muffler 42, the flow generated in the flow straightening structure 61 is easily scattered by the fast-flowing vortex. On the other hand, the contamination of the periphery of the rear wheel WR and the muffler 42 due to the splashed rainwater or the like WO can be effectively curbed by providing the water blocking wall 73 in front of the rear wheel WR and the muffler 42.

As shown in FIG. 12, a main stand 75 which supports the vehicle body in an upright standing state is provided at the lower portion of the vehicle body of the motorcycle 1 (for example, the lower portion of the power unit U). The main stand 75 is swingably supported by a stand bracket 76 provided at the lower portion of the power unit U via a swing shaft 77 which extends in the vehicle width direction.

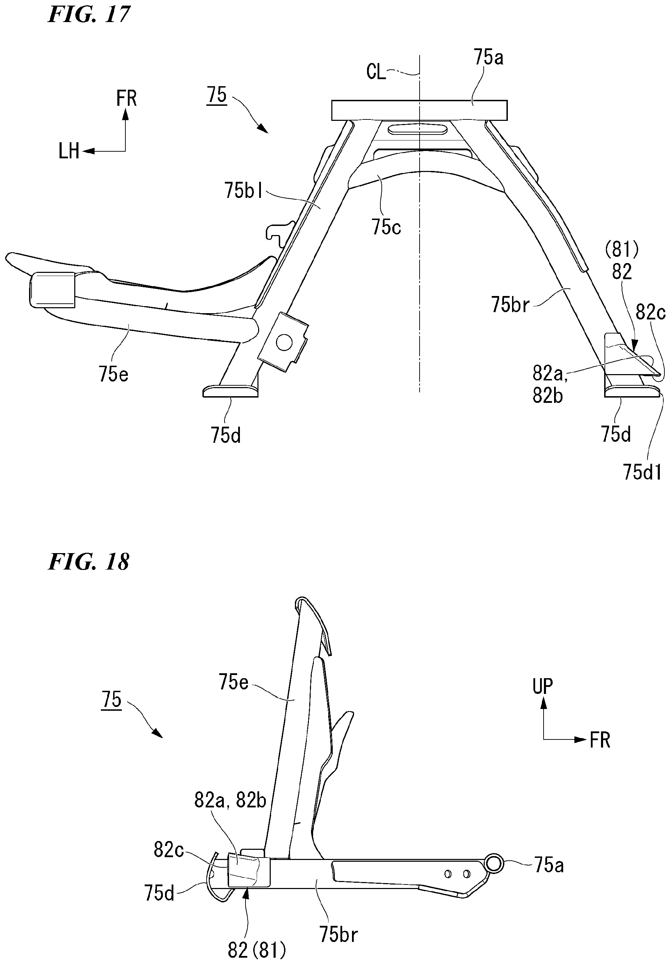

Referring to FIGS. 17 and 18 together, the main stand 75 includes a base portion 75a through which the swing shaft 77 is inserted, and a pair of left and right support legs 75bl and 75br which extend diagonally from left and right side portions of the base portion 75a to expand outward in the vehicle width direction. In the drawing, a reference numeral 75c is a connecting portion which extends between the left and right support legs 75bl and 75br on the base portion 75a side, a reference numeral 75d is a pair of left and right grounding plates fixed to tip ends of the left and right support legs 75bl and 75br, and a reference numeral 75e indicates a stand operating arm which extends outward in the vehicle width direction with respect to the tip end side of the left support leg 75bl.

The main stand 75 can swing around the swing shaft 77, and swings between a retracted position at which the left and right support legs 75bl and 75br are disposed to extend in the forward and rearward direction in a side view and a use position at which the left and right support legs 75bl and 75br are disposed to extend in the vertical direction in the side view (refer to FIG. 12). In FIG. 12, the main stand 75 in the retracted position is shown by a solid line, and the main stand 75 in the use position is shown by a chain line. When the main stand 75 is in the retracted position, the left and right grounding plates 75d are spaced apart from the ground so that the motorcycle 1 can travel. When the main stand 75 is in the use position, the left and right grounding plates 75d are grounded and support the motorcycle 1 in the upright standing state.

The main stand 75 includes the flow straightening structure 81 on the tip end side of the right support leg 75br. The flow straightening structure 81 has a tapered portion 82 which widens toward the tip end side of the right support leg 75br. The tapered portion 82 is formed by, for example, welding and fixing an umbrella-shaped member separate from the right support leg 75br to the right support leg 75br. The tapered portion 82 extends an open end 82c on the tip end side of the support leg to a position equivalent to an outer end 75d1 of the grounding plate 75d in the vehicle width direction. The open end 82c of the tapered portion 82 on the tip end side forms a gap between the open end 82c and the grounding plate 75d in the forward and rearward direction of the vehicle.

Referring to FIG. 12, when the main stand 75 is in the retracted position, the tapered portion 82 is located behind the rear wheel front end position Pfr and in front of the rear wheel center height Pct, and is located below the rear wheel center height Pct and the muffler 42. When the main stand 75 is in the retracted position, the tapered portion 82 is in a position at which it overlaps the rear wheel WR in a side view. When the main stand 75 is in the retracted position, an outer peripheral surface (an inclined surface which faces the front of the vehicle) 82b of the tapered portion 82 becomes the traveling wind receiving surface 82a which receives the traveling wind when the vehicle travels.

In such a configuration, when the motorcycle 1 travels and the traveling wind comes into contact with the traveling wind receiving surface 82a of the flow straightening structure 81 of the main stand 75, the traveling wind flows along the traveling wind receiving surface 82a.

As shown in FIGS. 19 and 20, the traveling wind receiving surface 82a allows the traveling wind W1 to flow in a predetermined direction (in the example, outside in the vehicle width direction and below the muffler 42). That is, the traveling wind receiving surface 82a causes the traveling wind W1 to flow in a predetermined direction with directivity. The traveling wind W1 guided by the traveling wind receiving surface 82a is indicated by a reference numeral W1".

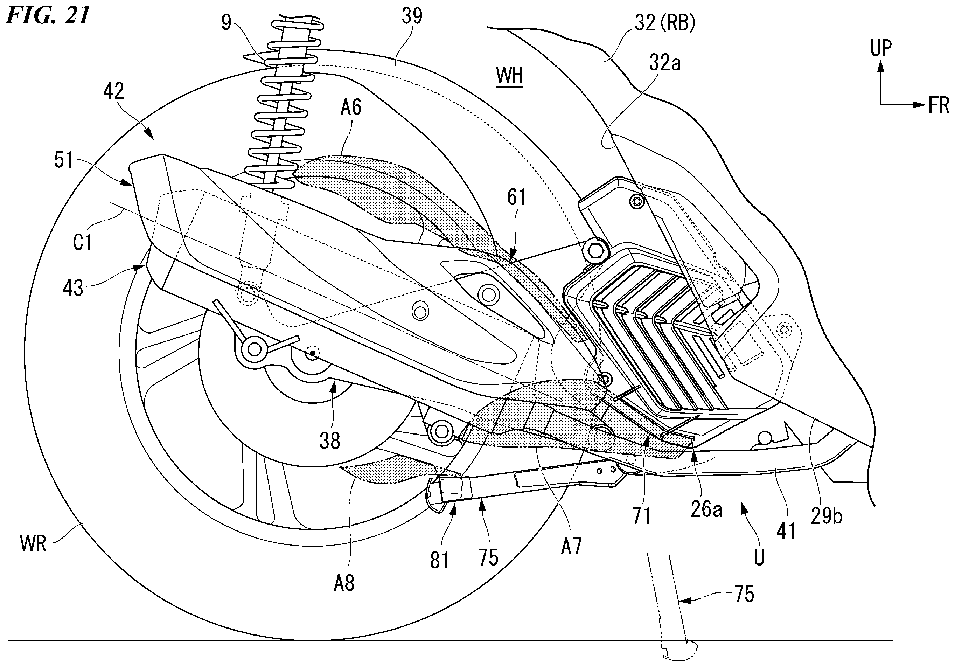

FIG. 21 shows regions A6, A7, and A8 (that is, regions in which the pressure is low) which are generated on the right side of the rear wheel WR by the flow straightening structure 61 provided on the muffler 42, the flow straightening structure 71 provided on the radiator cover 26a and the flow straightening structure 81 provided on the main stand 75 and in which the flow velocity is high. Due to the flow straightening structures 61, 71, and 81, a low pressure region widely dispersed vertically is generated on the right side of the rear wheel WR.

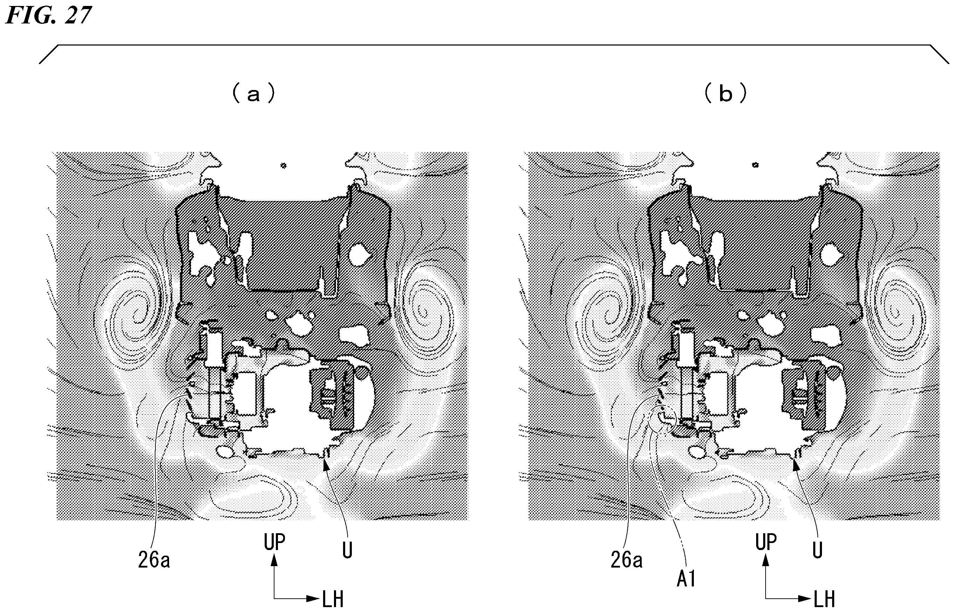

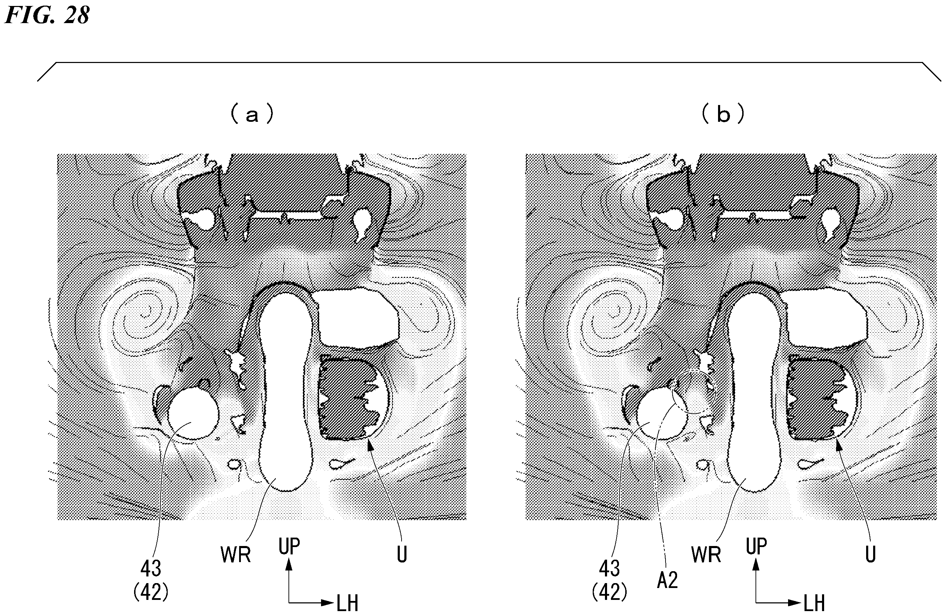

FIGS. 27 and 28 are views showing the fluid analysis results of the flow straightening structure 71 together with a comparative example. FIG. 27 is a cross-sectional view corresponding to a front and rear intermediate position of the flow straightening structure 71, and FIG. 28 is a cross-sectional view corresponding to a rear position past the flow straightening structure 71. In each of the drawings, (a) shows an embodiment including the flow straightening structure 71, and (b) shows a comparative example which does not include the flow straightening structure 71.

As shown in FIG. 27(b), it can be understood that the flow velocity in the region A1 on the lower surface side of the radiator cover 26a is higher in the comparative example which does not include the flow straightening structure 71.

As shown in FIG. 28(b), it can be understood that, in the comparative example which does not include the flow straightening structure 71, there is more flow toward the wheel side of the rear wheel WR in a region A2 inside the muffler 42 in the vehicle width direction (in an extending direction of the flow straightening structure 71).

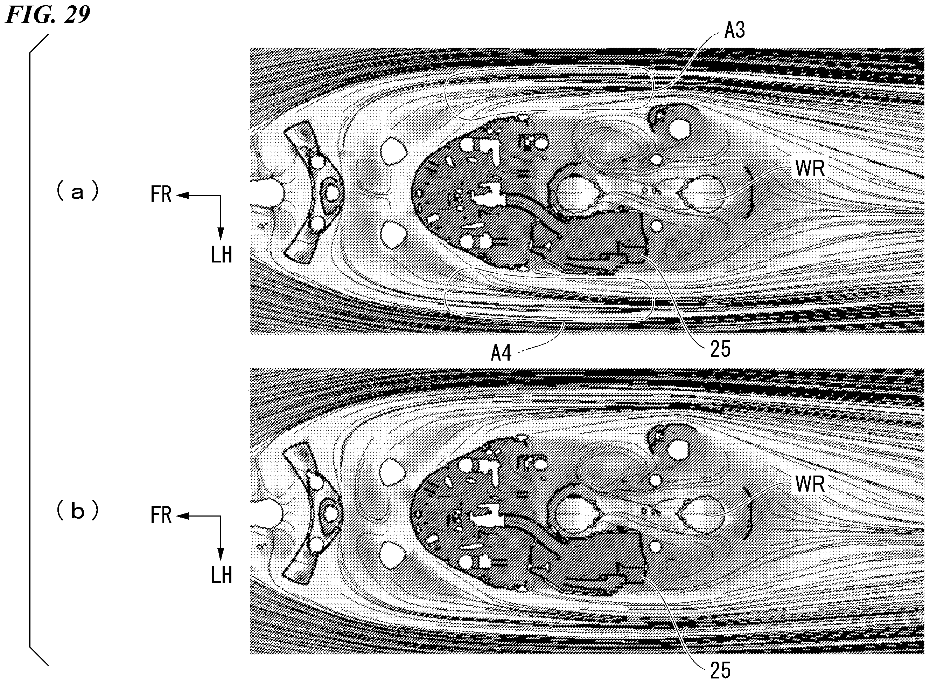

FIG. 29 is a view showing the fluid analysis results of the flow straightening structure 81 together with a comparative example, and is a cross-sectional view at a height intersecting with the air cleaner 25. (a) shows an embodiment including the flow straightening structure 81, and (b) shows a comparative example which does not include the flow straightening structure 81.

As shown in FIG. 29(a), it can be understood that a flow velocity of the traveling wind in a region A3 on the right side (the flow straightening structure 81 side) of the rear wheel WR is faster than a flow velocity of the traveling wind in a region A4 on the left side (the air cleaner 25 side) of the rear wheel WR.

Referring to FIG. 20, turbulence generated in the tire house WH is pushed out to the right side of the rear wheel WR in a wide range (arrow W3) by a low pressure region generated on the muffler 42 side. Thus, pushing out of the turbulence to the air cleaner 25 side located on the left side of the rear wheel WR is reduced, and a decrease in air suction efficiency of intake system components is curbed. An air flow W4 which is relatively slow with respect to air flows W2, W1', and W1" on the muffler 42 side is generated around the air cleaner 25.

As described above, the flow straightening structure of the saddle-riding type vehicle in the example includes the radiator cover 26a of which at least a part overlaps the rear wheel WR in a side view of the vehicle and also includes the flow straightening structure 71 in which the traveling wind receiving surface 72a is formed on the radiator cover 26a.

With such a configuration, the traveling wind flowing along the traveling wind receiving surface 72a of the flow straightening structure 71 of the radiator cover 26a is guided in a predetermined direction and flows with directivity. An effect in which the air in the tire house WH is pushed out to the side of the rear wheel WR can be obtained by causing the traveling wind with such directivity to flow to the side of the rear wheel WR (the side of the tire house WH), for example. In this way, the turbulence generated around the rear wheel WR can be curbed by providing the flow straightening structure 71 on the radiator cover 26a which overlaps the rear wheel WR in a side view of the vehicle to control the air flow.

Further, the flow straightening structure of the saddle-riding type vehicle in the example includes the main stand 75 in which at least a part overlaps the rear wheel WR in side view of the vehicle, and also includes the flow straightening structure 81 in which the traveling wind receiving surface 82a is formed on the main stand 75.

With such a configuration, the traveling wind flowing along the traveling wind receiving surface 82a of the flow straightening structure 81 of the main stand 75 is guided in a predetermined direction and flows with directivity. The effect in which the air in the tire house WH is pushed out to the side of the rear wheel WR can be obtained by causing the traveling wind with such directivity to flow to the side of the rear wheel WR (the side of the tire house WH), for example. Also in this configuration, the turbulence generated around the rear wheel WR can be curbed by providing the flow straightening structure 81 on the main stand 75 which overlaps the rear wheel WR in a side view of the vehicle to control the air flow.

The present invention is not limited to the above-described embodiment, and for example, the flow straightening structure may be provided in the silencer main body. That is, the flow straightening structure may be provided on at least one of the silencer main body and the cover member. The flow straightening structure is widely applicable not only to scooter-type vehicles having a step floor and unit swing-type vehicles, but also to saddle-riding type vehicles equipped with a silencer on the side of the rear wheel. When the saddle-riding type vehicle has two left and right silencers, the flow straightening structure may be provided on both the silencers. Further, the flow straightening structure may be provided not only in a built-in radiator type engine to which the radiator is integrally mounted, but also on an engine cover member of an engine equipped with a separate radiator.

The saddle-riding type vehicle includes general vehicles in which a driver straddles a vehicle body, and also includes not only motorcycles (including motorized bicycles and scooter type vehicles), but also three-wheeled vehicles (including front two-wheel and rear one-wheel vehicles in addition to front one-wheel and rear two-wheel vehicles) or four-wheeled vehicles.

Additionally, the configuration in the above-described embodiment is an example of the present invention, and various modifications can be made without departing from the scope of the present invention as defined by the appended claims, such as replacing the constituent elements of the embodiment with well-known constituent elements.

### BRIEF DESCRIPTION OF THE REFERENCE SYMBOLS

1: Motorcycle (saddle-riding type vehicle)
WR: Rear wheel
E: Engine (internal combustion engine)
F: Vehicle body frame
U: Power unit (swing unit)
25: Air cleaner (intake system component)
25c: Suction port
26: Radiator
26a: Radiator cover (member which overlaps rear wheel in side view of vehicle, cover member)
42: Muffler (member which overlaps rear wheel in side view of vehicle, silencer)
43: Muffler main body (silencer main body)
51: Muffler cover (cover member)
52: Upper surface portion
52b: Inner eaves portion
53: Rearward and upward inclined portion
53b: Inner edge portion
54: Rearward and downward inclined portion
61, 71, 81: Flow straightening structure
62: Inclined portion
62a, 72a, 82a: Traveling wind receiving surface
63: Protruding portion
72: Bead portion (projection portion)
75: Main stand (member which overlaps rear wheel in side view of vehicle, stand)
75br: Right support leg (support leg)
75d: Grounding plate
75d1: Outer end
82: Tapered portion
82c: Open end
C1: Axis

## Claims

1. A flow straightening structure of a saddle-riding type vehicle, comprising:
a silencer (42) which is disposed on a side of a rear wheel (WR) so that at least a part thereof overlaps the rear wheel (WR) in a side view of the vehicle, and which silences exhaust gas discharged from an internal combustion engine (E),
wherein
the silencer (42) includes the flow straightening structure (61) which forms a traveling wind receiving surface (62a) which receives traveling wind,
the flow straightening structure (61) is to guide the traveling wind which flows along the traveling wind receiving surface (62a) in a predetermined direction,
the silencer (42) includes an inclined portion (62) which extends diagonally in a forward and rearward direction of the vehicle and forms the traveling wind receiving surface (62a), and a protruding portion (63) which extends along the inclined portion (62) and protrudes upward from the traveling wind receiving surface (62a) to form the flow straightening structure (61),
the silencer (42) extends along an axis (C1),
an upper surface portion (52) of the silencer (42) has a rearward and upward inclined portion (53) which is inclined rearward and upward with respect to the axis (C1) in a side view, and a rearward and downward inclined portion (54) which is connected to a rear of the rearward and upward inclined portion (53) and is inclined rearward and downward with respect to the axis (C1) in a side view, and
the flow straightening structure (61) is provided in front of the rearward and downward inclined portion (54), and is provided on the rearward and upward inclined portion (53).

2. The flow straightening structure of a saddle-riding type vehicle according to claim 1, wherein the protruding portion (63) which has a rib shape and bends upward and extends from the inclined portion (62) in the flow straightening structure (61) is provided at an inner edge portion (53b) of the rearward and upward inclined portion (53) on an inner side in a vehicle width direction.

3. The flow straightening structure of a saddle-riding type vehicle according to claim 1 or 2, wherein an inner eaves portion (52b) is provided inside the rearward and downward inclined portion (54) in a vehicle width direction to protrude in a flush manner to avoid the rearward and upward inclined portion (53).

4. The flow straightening structure of a saddle-riding type vehicle according to any one of the preceding claims, wherein the silencer (42) includes a silencer main body (43) and a cover member (51) which is mounted on the silencer main body (43), and
the inclined portion (62) and the protruding portion (63) are provided on at least one of the silencer main body (43) and the cover member (51).

5. The flow straightening structure of a saddle-riding type vehicle according to any one of the preceding claims, wherein the saddle-riding type vehicle (1) includes a swing unit (U) which allows the internal combustion engine (E) and the rear wheel (WR) to swing integrally with respect to a vehicle body frame (F).

6. The flow straightening structure of a saddle-riding type vehicle according to any one of the preceding claims, wherein an intake system component (25) which suctions air into the internal combustion engine (E) is provided,
the intake system component (25) has a suction port (25c) located furthest upstream,
the silencer (42) is disposed on one side of the rear wheel (WR), and the suction port (25c) is disposed on the other side of the rear wheel (WR).

7. The flow straightening structure of a saddle-riding type vehicle according to any one of the preceding claims, wherein the inclined portion (62) and the protruding portion (63) are inclined to be located upward toward a rear in a side view of the vehicle.

8. The flow straightening structure of a saddle-riding type vehicle according to any one of the preceding claims, wherein the inclined portion (62) and the protruding portion (63) are inclined to be located inward in a vehicle width direction toward the rear in a top view of the vehicle.

9. The flow straightening structure of a saddle-riding type vehicle according to any one of the preceding claims, wherein the protruding portion (63) is formed to be located upward toward an inner side of the inclined portion (62) in a vehicle width direction.

10. The flow straightening structure of a saddle-riding type vehicle according to any one of the preceding claims, wherein the inclined portion (62) and the protruding portion (63) extend to have an arc-shaped cross-sectional shape.

11. The flow straightening structure of a saddle-riding type vehicle according to any one of claims 1 to 10, wherein an internal combustion engine (E) is provided at a power unit (U) of the saddle-riding type vehicle, and
a suction port (25c) of an air cleaner (25) which filters external air supplied to the internal combustion engine (E) is provided on a side opposite to the flow straightening structure (61) with the rear wheel (WR) sandwiched therebetween in a vehicle width direction.

## Patentansprüche

1. Strömungsausrichtungsstruktur eines Fahrzeugs des Sattelsitztyps, die aufweist:
einen Auspufftopf (42), der an einer Seite eines Hinterrads (WR) angeordnet ist, sodass zumindest ein Teil davon das Hinterrad (WR) in einer Seitenansicht des Fahrzeugs überlappt und der aus einem Verbrennungsmotor (E) ausgeleitetes Abgas dämpft,
wobei
der Auspufftopf (42) die Strömungsausrichtungsstruktur (61) aufweist, die eine Aufnahmefläche für den Fahrtwind (62a) bildet, die den Fahrtwind aufnimmt,
die Strömungsausrichtungsstruktur (61) dazu dient, den Fahrtwind, der entlang der Fahrtwind-Aufnahmefläche (62a) strömt, in eine vorbestimmte Richtung zu führen,
der Auspufftopf (42) einen geneigten Bereich (62) aufweist, der in einer Fahrzeugrichtung nach vorne und hinten verläuft und die Fahrtwind-Aufnahmefläche (62a) bildet, und einen Vorsprungsbereich (63), der entlang dem geneigten Bereich (62) verläuft und von der Fahrtwind-Aufnahmefläche (62a) nach oben hervorsteht, um die Strömungsausrichtungsstruktur (61) zu bilden,
der Auspufftopf (42) entlang einer Achse (C1) verläuft,
ein oberer Flächenbereich (52) des Auspufftopfs (42) einen nach hinten und oben geneigten Bereich (53) hat, der bezüglich der Achse (C1) in einer Seitenansicht nach hinten und oben geneigt ist, und ein nach hinten und unten geneigten Bereich (54), der mit einer Rückseite des nach hinten und oben geneigten Bereichs (53) verbunden ist und
nach hinten und unten bezüglich der Achse (C1) in einer Seitenansicht geneigt ist, und
die Strömungsausrichtungsstruktur (61) vor dem nach hinten und unten geneigten Bereich (54) vorgesehen ist und am nach hinten und oben geneigten Bereich (53) vorgesehen ist.

2. Strömungsausrichtungsstruktur eines Fahrzeugs des Sattelsitztyps nach Anspruch 1,
wobei der Vorsprungsbereich (63), der eine Rippenform hat und sich nach oben biegt und von dem geneigten Bereich (62) in der Strömungsausrichtungsstruktur (61) verläuft, an einem Innenkantenbereich (53b) des nach hinten und oben geneigten Bereichs (53) an einer Innenseite in einer Fahrzeugbreitenrichtung vorgesehen ist.

3. Strömungsausrichtungsstruktur eines Fahrzeugs des Sattelsitztyps nach Anspruch 1 oder 2, wobei ein Innenvorsprungsbereich (52b) in dem nach hinten und unten geneigten Bereich (54) in einer Fahrzeugbreitenrichtung vorgesehen ist, um eben hervorzustehen, um den nach hinten und oben geneigten Bereich (53) zu umgehen.

4. Strömungsausrichtungsstruktur eines Fahrzeugs des Sattelsitztyps nach einem der vorhergehenden Ansprüche, wobei der Auspufftopf (42) einen Auspufftopf-Hauptkörper (43) aufweist und ein Verkleidungselement (51), das an dem Auspufftopf-Hauptkörper (43) angebracht ist, und
der geneigte Bereich (62) und der Vorsprungsbereich (63) an wenigstens einem von dem Auspufftopf-Hauptkörper (43) und dem Verkleidungselement (51) vorgesehen sind.

5. Strömungsausrichtungsstruktur eines Fahrzeugs des Sattelsitztyps nach einem der vorhergehenden Ansprüche, wobei das Fahrzeug des Sattelsitztyps (1) eine Schwingeinheit (U) aufweist, die dem Verbrennungsmotor (E) und dem Hinterrad (WR) ermöglicht, bezüglich des Fahrzeugkarosserierahmens (F) integral zu schwingen.

6. Strömungsausrichtungsstruktur eines Fahrzeugs des Sattelsitztyps nach einem der vorhergehenden Ansprüche, wobei eine Einlasssystemkomponente (25), die Luft in den Verbrennungsmotor (E) ansaugt, vorgesehen ist,
die Einlasssystemkomponente (25) eine Ansaugöffnung (25c) hat, die sich am weitesten vorgelagert befindet,
der Auspufftopf (42) an einer Seite des Hinterrads (WR) angeordnet ist und die Ansaugöffnung (25c) an der anderen Seite des Hinterrads (WR) angeordnet ist.

7. Strömungsausrichtungsstruktur eines Fahrzeugs des Sattelsitztyps nach einem der vorhergehenden Ansprüche, wobei der geneigte Bereich (62) und der Vorsprungsbereich (63) geneigt sind, um sich in Richtung einer Rückseite in einer Seitenansicht des Fahrzeugs oben zu befinden.

8. Strömungsausrichtungsstruktur eines Fahrzeugs des Sattelsitztyps nach einem der vorhergehenden Ansprüche, wobei der geneigte Bereich (62) und der Vorsprungsbereich (63) geneigt sind, um sich in einer Fahrzeugbreitenrichtung in Richtung der Rückseite in einer Ansicht des Fahrzeugs von oben innen zu befinden.

9. Strömungsausrichtungsstruktur eines Fahrzeugs des Sattelsitztyps nach einem der vorhergehenden Ansprüche, wobei der Vorsprungsbereich (63) ausgebildet ist, um sich in Richtung einer Innenseite des geneigten Bereichs (62) in einer Fahrzeugbreitenrichtung oben zu befinden.

10. Strömungsausrichtungsstruktur eines Fahrzeugs des Sattelsitztyps nach einem der vorhergehenden Ansprüche, wobei der geneigte Bereich (62) und der Vorsprungsbereich (63) verlaufen, um eine bogenförmige Querschnittsform zu haben.

11. Strömungsausrichtungsstruktur eines Fahrzeugs des Sattelsitztyps nach einem der Ansprüche 1 bis 10, wobei ein Verbrennungsmotor (E) an einer Antriebseinheit (U) des Fahrzeugs des Sattelsitztyps vorgesehen ist, und
eine Ansaugöffnung (25c) eines Luftfilters (25), der dem Verbrennungsmotor (E) zugeleitete Außenluft filtert, an einer Seite gegenüberliegend zur Strömungsausrichtungsstruktur (61) vorgesehen ist, wobei das Hinterrad (WR) dazwischen in einer Fahrzeugbreitenrichtung angeordnet ist.

## Revendications

1. Structure de stabilisation de flux d'un véhicule du type à selle, comprenant :
un silencieux (42) qui est disposé sur un côté d'une roue arrière (WR) de sorte qu'au moins une partie de celui-ci chevauche la roue arrière (WR) dans une vue latérale du véhicule, et qui rend silencieux les gaz d'échappement rejetés d'un moteur à combustion interne (E),
dans laquelle
le silencieux (42) comporte la structure de stabilisation de flux (61) qui forme une surface de réception de vent de déplacement (62a) qui reçoit le vent de déplacement,
la structure de stabilisation de flux (61) est destinée à guider le vent de déplacement qui circule le long de la surface de réception de vent de déplacement (62a) dans une direction prédéterminée,
le silencieux (42) comporte une partie inclinée (62) qui s'étend en diagonale dans une direction avant et arrière du véhicule et forme la surface de réception de vent de déplacement (62a), et une partie saillante (63) qui s'étend le long de la partie inclinée (62) et fait saillie vers le haut à partir de la surface de réception de vent de déplacement (62a) pour former la structure de stabilisation de flux (61),
le silencieux (42) s'étend le long d'un axe (C1),
une partie de surface supérieure (52) du silencieux (42) présente une partie inclinée vers l'arrière et vers le haut (53) qui est inclinée vers l'arrière et vers le haut par rapport à l'axe (C1) dans une vue latérale, et une partie inclinée vers l'arrière et vers le bas (54) qui est reliée à un arrière de la partie inclinée vers l'arrière et vers le haut (53) et est inclinée vers l'arrière et vers le bas par rapport à l'axe (C1) dans une vue latérale, et
la structure de stabilisation de flux (61) est prévue à l'avant de la partie inclinée vers l'arrière et vers le bas (54), et est prévue sur la partie inclinée vers l'arrière et vers le haut (53).

2. Structure de stabilisation de flux d'un véhicule du type à selle selon la revendication 1, dans laquelle la partie saillante (63) qui présente une forme de nervure et fléchit vers le haut et s'étend à partir de la partie inclinée (62) dans la structure de stabilisation de flux (61) est prévue au niveau d'une partie de bord intérieur (53b) de la partie inclinée vers l'arrière et vers le haut (53) sur un côté intérieur dans une direction de largeur de véhicule.

3. Structure de stabilisation de flux d'un véhicule du type à selle selon la revendication 1 ou 2, dans laquelle une partie de corniche intérieure (52b) est prévue à l'intérieur de la partie inclinée vers l'arrière et vers le bas (54) dans une direction de largeur de véhicule pour faire saillie d'une manière affleurante pour éviter la partie inclinée vers l'arrière et vers le haut (53).

4. Structure de stabilisation de flux d'un véhicule du type à selle selon l'une quelconque des revendications précédentes, dans laquelle le silencieux (42) comporte un corps principal de silencieux (43) et un organe de recouvrement (51) qui est monté sur le corps principal de silencieux (43), et
la partie inclinée (62) et la partie saillante (63) sont prévues sur au moins l'un du corps principal de silencieux (43) et de l'organe de recouvrement (51).

5. Structure de stabilisation de flux d'un véhicule du type à selle selon l'une quelconque des revendications précédentes, dans laquelle le véhicule du type à selle (1) comporte une unité oscillante (U) qui permet au moteur à combustion interne (E) et à la roue arrière (WR) d'osciller d'un seul tenant par rapport à un cadre de corps de véhicule (F).

6. Structure de stabilisation de flux d'un véhicule du type à selle selon l'une quelconque des revendications précédentes, dans laquelle un composant de système d'admission (25) qui aspire l'air à l'intérieur du moteur à combustion interne (E) est prévu,
le composant de système d'admission (25) présente un orifice d'aspiration (25c) situé le plus en amont,
le silencieux (42) est disposé sur un côté de la roue arrière (WR), et l'orifice d'aspiration (25c) est disposé sur l'autre côté de la roue arrière (WR).

7. Structure de stabilisation de flux d'un véhicule du type à selle selon l'une quelconque des revendications précédentes, dans laquelle la partie inclinée (62) et la partie saillante (63) sont inclinées de manière à être situées vers le haut en direction d'un arrière dans une vue latérale du véhicule.

8. Structure de stabilisation de flux d'un véhicule du type à selle selon l'une quelconque des revendications précédentes, dans laquelle la partie inclinée (62) et la partie saillante (63) sont inclinées de manière à être situées à l'intérieur dans une direction de largeur de véhicule vers l'arrière dans une vue de dessus du véhicule.

9. Structure de stabilisation de flux d'un véhicule du type à selle selon l'une quelconque des revendications précédentes, dans laquelle la partie saillante (63) est formée pour être située vers le haut en direction d'un côté intérieur de la partie inclinée (62) dans une direction de largeur de véhicule.

10. Structure de stabilisation de flux d'un véhicule du type à selle selon l'une quelconque des revendications précédentes, dans laquelle la partie inclinée (62) et la partie saillante (63) s'étendent de manière à présenter une forme arquée en section transversale.

11. Structure de stabilisation de flux d'un véhicule du type à selle selon l'une quelconque des revendications 1 à 10, dans laquelle un moteur à combustion interne (E) est prévu au niveau d'un groupe moteur (U) du véhicule du type à selle, et
un orifice d'aspiration (25c) d'un filtre à air (25) qui filtre l'air extérieur amené au moteur à combustion interne (E) est prévu sur un côté opposé à la structure de stabilisation de flux (61) avec la roue arrière (WR) en sandwich entre ceux-ci dans une direction de largeur de véhicule.
